# EUROPÄISCHE PATENTSCHRIFT

(11) **EP 2 029 461 B1**
(45) Veröffentlichungstag und Bekanntmachung des Hinweises auf die Patenterteilung: **13.10.2010**
(21) Anmeldenummer: 07718473.7
(22) Anmeldetag: 01.06.2007
(51) Int. Cl.: B65G 47/53, B65G 47/64

(54) **TRANSPORTANLAGE FÜR TEILETRÄGER**
TRANSPORT INSTALLATION FOR PARTS CARRIERS
INSTALLATION DE TRANSPORT POUR SUPPORTS DE PIÈCES

(30) Priorität: 16.06.2006 AT 10252006
(43) Veröffentlichungstag der Anmeldung: 04.03.2009
(73) Patentinhaber: STIWA-Fertigungstechnik Sticht Gesellschaft m.b.H, 4800 Attnang-Puchheim (AT)
(72) Erfinder: PUCHER, Christian, 4690 Pitzenberg (AT)
(74) Vertreter: Burger, Hannes
(86) Internationale Anmeldenummer: PCT/AT2007/000262
(87) Internationale Veröffentlichungsnummer: WO 2007/143763

(56) Entgegenhaltungen:
- NL-C2- 1 027 412
- US-A- 3 401 789
- US-A- 3 690 435
- US-A1- 2004 238 323

## Beschreibung

Die Erfindung bezieht sich auf eine Transportanlage für Teileträger sowie auf ein Verfahren zum Umsetzen eines Teileträgers in einer Transportanlage von einem Transportsystem mit einer ersten Führungsbahn auf eine dazu distanzierte sowie gegebenenfalls quer zur ersten Führungsbahn ausgerichtete weitere Führungsbahn, wie dies in den Oberbegriffen der Ansprüche 1 sowie 63 beschrieben wird und aus der US-A-3 690 435 bekannt sind.

Bei bisher bekannten Übergabeeinrichtungen war es bekannt, dass zum Umsetzen bzw. Übersetzen eines Teileträgers von einer Führungsbahn des Transportsystems auf eine andere Führungsbahn bzw. ein anderes Transportsystem der Teileträger mittels Handling-Einrichtung vom einen Transportsystem entnommen und in das andere Transportsystem eingelegt und am dortigen Werkstückträger verriegelt werden musste. Dadurch ergaben sich längere Zykluszeiten zum Wechseln des Teileträgers bei gleichzeitig höherem Kosten und Materialeinsatz.

Der vorliegenden Erfindung liegt die Aufgabe zugrunde, eine Transportanlage für Teileträger, insbesondere eine Übergabeeinrichtung, sowie ein Verfahren zum Umsetzen des Teileträgers in der Transportanlage von einem Transportsystem mit einer ersten Führungsbahn auf eine weitere Führungsbahn zu schaffen, bei welcher bzw. welchem die Leistung der Transportanlage und damit verbunden, auch deren Produktivität, erhöht werden kann.

Diese Aufgabe der Erfindung wird dadurch gelöst, dass die Vorschubvorrichtung der Übergabeeinrichtung einen ersten und einen zweiten Förderabschnitt aufweist, wobei der erste Förderabschnitt der ersten Führungsbahn des Transportsystems zugewendet ist, und der erste Förderabschnitt von einer Eingriffsstellung mit den am. Teileträger angeordneten Eingriffselementen in eine außer Eingriff befindliche Ruhestellung verbringbar ist, wobei der erste Förderabschnitt in der Eingriffsstellung zumindest bereichsweise in das Lichtraumprofil der Trageinheit für den Teileträger hineinragt und in der Ruhestellung der erste Förderabschnitt in einer Position außerhalb des Lichtraumprofils der Trageinheit angeordnet ist. Vorteilhaft ist dabei, dass die Übergabe des Teileträgers zwischen den beiden Führungsbahnen durch aufeinander abgestimmte Arbeitstakte der beiden Förderabschnitte im Bereich der Übergabeeinrichtung erfolgt. So wird beim Transport des Teileträgers ausgehend von der ersten Führungsbahn dieser so lange entlang transportiert, bis sich der Teileträger in der Übergabeposition befindet und anschließend für eine sehr kurze Zeitspanne der erste Förderabschnitt in Eingriff mit dem Teileträger gebracht und dabei von der ersten Führungsbahn hin zur Übergabeeinrichtung verfahren wird. Dieser Weg ist nur so weit wie unbedingt notwendig gewählt, wobei unmittelbar nach dem Erreichen dieser Zwischenposition der erste Förderabschnitt in seine Ruhestellung zurück verstellt wird. Dadurch ist ein ungehindertes weiteres Verfahren der Teileträger im Bereich der ersten Führungsbahn nach einem sehr kurzen Zeitraum wiederum möglich, wobei so z.B. in den dem ersten Förderabschnitt zugeordneten Arbeitsstationen unterschiedlichste Arbeits-, Füge-, Bearbeitungs- oder Montagevorgänge durchgeführt werden können, ohne dass im Bereich der Übergabeeinrichtung eine hohe Verweildauer notwendig ist. Gleiches gilt aber auch beim Umsetzen des Teileträgers von der weiteren Führungsbahn hin zur ersten Führungsbahn. Dabei wird der Teileträger durch den zweiten Förderabschnitt in die Zwischenposition im Bereich der Übergabeeinrichtung verfahren und kann bei Bedarf mittels des ersten Förderabschnitts bei sich in der Übergabeposition befindlicher Trageinheit auf diese hin verfahren werden. Damit wird auch hier jene Zeitdauer für den Übergabevorgang wiederum sehr kurz gehalten, da der Teileträger durch den voneinander getrennten Eingriff der Förderabschnitte zuerst in die Zwischenposition an der Übergabeeinrichtung verfahren wird, welche unmittelbar benachbart zur ersten Führungsbahn angeordnet ist, ohne dass dabei das Verfahren der Teileträger im Bereich der ersten Führungsbahn beeinträchtigt wird. Ist nun der die den Teileträger aufnehmende Trageinheit in die Übergabeposition verfahren worden, wird der erste Förderabschnitt in Eingriff mit dem Teileträger gebracht und auf kürzestem Weg bei geringsten Zeitbedarf auf den Teileträger verfahren. Unmittelbar darauf kann der erste Förderabschnitt wieder in seine Ruheposition verstellt werden und es kann bereits nach kürzester Zeitdauer das Verfahren der Teileträger im Bereich der ersten Führungsbahn fortgesetzt werden. Damit sind kürzere Taktzeiten für das Umsetzen der Teileträger erzielbar, wobei so die Stillstandszeiten im Bereich weiterer Arbeitsstationen ebenfalls verkürzt werden.

Vorteilhaft ist auch eine weitere Ausführungsform nach Anspruch 2, da dadurch im Bereich der ersten Führungsbahn ein ungehinderter Transport entlang derselben stattfinden kann. Gleichzeitig kann aber auch dadurch ein Teileträger im Bereich der Übergabeeinrichtung vorpositioniert werden, um diesen auf kürzestem und schnellstem Weg auf die Trageinheit zu übergeben bzw. von dieser bei entsprechender Vorpositionierung zu übernehmen.

Vorteilhaft ist weiters eine Ausbildung nach Anspruch 3, da dadurch ein rascher und sicherer Transport der Teileträger im Bereich der Übergabeeinrichtung erzielbar ist.

Durch die Ausbildung nach Anspruch 4 ist es möglich, auch eine voneinander getrennte Anordnung der beiden Förderabschnitte zu realisieren, um so in den beiden Förderabschnitten ein wahlweises Eingreifen in die Eingriffselemente des Teileträgers zu ermöglichen. Dadurch sind wiederum kürzeste Taktzeiten für das Ein- oder Ausschleusen des Teileträgers zwischen den Führungsbahnen erzielbar.

Nach einer anderen Ausführungsvariante gemäß Anspruch 5 werden je nach Lage und Ausrichtung der Förderabschnitte in Bezug zur zumeist horizontal ausgerichteten Transportebene wahlweise die Förderabschnitte in Eingriff bzw. außer Eingriff mit den Eingriffselementen gebracht.

Vorteilhaft ist auch eine Weiterbildung nach Anspruch 6, weil dadurch auf einfache Art und Weise ein durchlaufender Antrieb erzielbar ist, ohne dass dabei auf den Eingriff des Transportorgans mit den Eingriffselementen Bedacht genommen werden muss und zusätzlich mit wenigen Antriebsmitteln das Auslangen gefunden werden kann.

Bei der Ausgestaltung nach Anspruch 7 oder 8 ist von Vorteil, dass wahlweise die beiden Förderabschnitt in Eingriff mit dem zu verfahrenden Teileträger gebracht werden können und dadurch kürzeste Transportwege geschaffen werden. Gleichfalls wird dadurch jener Zeitraum bzw. jene Zeitspanne kurz gehalten, in welchem bzw. in welcher das Transportsystem für die Übernahme und/oder Übergabe angehalten werden muss und so ein rasches Umsetzen gewährleistet ist.

Durch die Weiterbildung nach Anspruch 9 oder 10 wird erreicht, dass so ohne hohen maschinentechnischen Aufwand mittels einer einfachen Schwenkbewegung die Förderabschnitte relativ zueinander verlagert werden können. Durch den gemeinsamen Tragteil mit einer einzigen Schwenkachse werden zusätzlich Verstellmechanismen vermieden.

Durch die Ausbildung nach Anspruch 11 oder 12 wird eine Platz sparende Antriebsvariante geschaffen, bei welcher um eine gemeinsame Achse mehrere Bauelemente verschwenkt bzw. verdrehbar gelagert sind und so auf kleinstem Raum die notwendigen Verstell- bzw. Antriebsbewegungen durchführbar sind. Dadurch werden im Bereich der Übergabeeinrichtung die Transportwege kurz gehalten.

Vorteilhaft ist auch eine Ausbildung nach Anspruch 13 oder 14, da dadurch im Bereich der Übergabeeinrichtung in Richtung der Vorschubbewegung der Teileträger eine geringe Baubreite erzielt werden kann und dadurch ebenfalls kürzeste Transportwege geschaffen werden.

Gemäß einer Ausbildung, wie im Anspruch 15 beschrieben, wird im Bereich der gemeinsamen Achse eine einfache Schwenkbewegung der beiden Förderabschnitte ermöglicht und so eine Verstellung in die beiden Endpositionen der Förderabschnitte durch kürzeste Verstellwege erreicht.

Dabei erweist sich eine Ausgestaltung nach Anspruch 16 oder 17 als vorteilhaft, weil dadurch einerseits die Endlagen und damit verbunden die Stellung der Förderabschnitte relativ zur Transportebene eindeutig festgelegt sind und andererseits bei Erreichen dieser Endlagen harte Schläge und damit eine Schwingungsübertragung auf das Gesamtsystem der Transportanlage vermieden wird.

Nach einer vorteilhaften Weiterbildung gemäß Anspruch 18 wird eine Überwachungsmöglichkeit zur Lagefeststellung der Führungsbahnen relativ gegenüber der Übergabeeinrichtung geschaffen, um so einen sichereren Betrieb der gesamten Transportanlage, insbesondere des Transportsystems, sicher zu stellen. Weiters können dadurch aber auch Kollisionen in der Eingriffstellung des ersten Förderabschnitts mit den Trageinheiten der ersten Führungsbahn vermieden werden.

Von Vorteil ist aber auch eine Ausbildung nach Anspruch 19, da dadurch auch im Bereich der Übergabeeinrichtung eine einwandfreie Führung des zu verfahrenden Teileträgers ermöglicht wird, wobei der Antrieb durch die Förderabschnitte der Vorschubvorrichtung erfolgt.

Gemäß Anspruch 20 wird sowohl eine eindeutige Längs- als auch Höhenführung gewährleistet. Darüber hinaus wird dabei der Platzbedarf gering gehalten, da die Führungsleisten innerhalb sowie unterhalb des zu verfahrenden Teileträgers angeordnet sind und mit den am Teileträger angeordneten Führungsorganen zusammenwirken.

Bei den Ausbildungen gemäß den Ansprüchen 21 bis 24 wird bei geringstem Platzaufwand eine exakte Längs- sowie Höhenführung der zu verfahrenden Teileträger erzielt. Darüber hinaus wird durch die quadratische Anordnung der einzelnen Fügungsorgane eine Möglichkeit geschaffen bei gleich gewähltem Abstand der Führungsleisten die Teileträger sowohl in Längs- als auch in Querrichtung dazu verfahren zu können, ohne dass dabei ein Verdrehen bzw. Verschwenken in die jeweilige Fortbewegungsrichtung notwendig ist.

Möglich ist dabei auch eine Ausbildung nach Anspruch 25, weil dadurch im Bereich der Übergabeeinrichtung im Zusammenwirkung mit der Vorschubrichtung für die zu verfahrenden Teileträger eine exakt vorbestimmbare Bewegungsbahn geschaffen wird.

Die Ausgestaltung nach Anspruch 26 ermöglicht eine Ausbildung des Teileträgers, welcher eine Verfahrbewegung in beide Bewegungsrichtungen, also Längs- und Querbewegungen, durchführen kann, ohne dass dabei eine Lageänderung des Teileträgers bezüglich seiner Fortbewegungsrichtung durchgeführt werden muss.

Bei der Ausbildung gemäß Anspruch 27 wird die Möglichkeit geschaffen, auch von der Unterseite des Teileträgers her auf die an diesem angeordneten bzw. gehalterten Bauteil einwirken zu können. Dies können Montage- und/oder Halte- und/oder Füge- und/oder Bearbeitungsvorgänge sein.

Vorteilhaft ist weiters eine Ausbildung nach Anspruch 28, da dadurch bei geringstem Platzbedarf eine eindeutige Längsführung gewährleistet ist und darüber hinaus auch noch die Gefahr einer Verletzung durch ein Einklemmen einer Bedienperson zwischen den Führungselementen und den Führungsorganen vermieden wird. Gleichfalls wird dadurch aber auch ein Großteil der Führungselemente abgedeckt, wodurch Verschmutzungen und damit verbunden Ungenauigkeiten in der Führung hintan gehalten werden.

Bei der Ausgestaltung nach Anspruch 29 oder 30 ist von Vorteil, dass so auch an der Trageinheit eine exakte Führung der Teileträger erzielbar ist. Dabei können die Teileträger sicher und lagegenau zwischen den einzelnen Führungsbahnen verstellt werden.

Durch die Ausbildung nach Anspruch 31 ist es möglich, eine gesicherte Übergabe der zu verfahrenden Teileträger zwischen der Trageinheit und der Übergabeeinrichtung zu erzielen. Durch dieses Übergreifen wird eine Verstellbewegung der Teileträger durch den der ersten Führungsbahn zugewandten Förderabschnitt ermöglicht.

Nach einer anderen Ausführungsvariante gemäß Anspruch 32 oder 33 wird eine Entlastung der zusammenwirkenden Führungsteile mit den Führungsorganen des Teileträgers bewirkt, wodurch eine Lastabtragung im Bereich von Arbeitsstationen direkt vom Teileträger auf die Trageinheit erfolgt, ohne dass dabei eine Last bzw. eine Kraft auf die zusammenwirkenden Führungsteile einwirkt. Dadurch wird eine lang andauernde Führungsgenauigkeit erzielt.

Vorteilhaft sind auch Weiterbildungen nach den Ansprüchen 34 bis 41, weil dadurch an vorbestimmten Stellen eine Lastübertragung bzw. Lastabtragung vom Teileträger hin auf die Trageinheit erfolgt und so eine verkippungsfreie Abstützung erzielbar ist. Durch die mehrfache gegenseitige Abstützung und das Zusammenwirken von entsprechenden Stützmittel können die Freiheitsgrade zwischen dem Teileträger und der Trageinheit weiter eingeschränkt werden. So wird eine noch höhere Positioniergenauigkeit zwischen dem Teileträger und der Trageinheit erzielt. Weiters wird dadurch aber auch die Geräuschentwicklung während des gemeinsamen Transports zwischen dem Teileträger und der Trageinheit herabgesetzt und so der Geräuschpegel der gesamten Transportanlage minimiert. Darüber hinaus wird auch eine Abtragung der Last sowie von zusätzlichen Bearbeitungs- bzw. Fügekräften unabhängig von der Ausrichtung des Teileträgers bezüglich seiner Vorschubrichtung erzielt.

Bei der Ausgestaltung nach Anspruch 42 ist von Vorteil, dass dadurch die Teileträger an vorbestimmten Stellen entsprechend überwacht und der Arbeitsablauf damit gesichert gesteuert werden kann.

Durch die Weiterbildung nach Anspruch 43 wird erreicht, dass dadurch ein Einschwenken des ersten Förderabschnitts in das von der Trageinheit geschaffene Lichtraumprofil ermöglicht wird und so eine Übergabe- und/oder Übernahme der Teileträger von der Trageinheit hin zur Übergabeeinrichtung oder umgekehrt erfolgen kann. Weiters wird dadurch aber auch noch eine entsprechende Abstützung der an der Trageinheit angeordneten Führungselemente bzw. Führungsleisten geschaffen, um so eine gesicherte Verstellbewegung der Teileträger durchführen zu können.

Durch die Ausbildungen nach den Ansprüchen 44 bis 60 kann eine eindeutige Lagefixierung der an der Trageinheit zu halternden Teileträger erfolgen. Diese zwischen dem Teileträger und der Trageinheit angeordnete Positionier- und Verriegelungsvorrichtung legt den Teileträger bezüglich der Trageinheit in Längsrichtung der an der Trageinheit angeordneten Führungsleisten fest, wodurch in beiden Bewegungsrichtungen, nämlich in Richtung der ersten Führungsbahn, als auch in Richtung der weiteren Führungselemente, eine eindeutige Lagepositionierung bei einer bedarfsweise lösbaren Verriegelung erzielt wird. Durch die zusammenwirkenden Keilflächen mit der im Teileträger ausgebildeten Positionierausnehmung wird eine selbst nachstellende bzw. selbst justierende Positionierung der einander zugeordneten Teile geschaffen. Eine Verstellung und damit Entriegelung des Positionierelements erfolgt durch entsprechende Verlagerung bzw. Verstellung über das damit verbundene Stellelements und dem am Stellelement angeordneten Stützelement. Dabei dienen die Stützelemente als Dreh- bzw. Schwenkpunkt für das länglich ausgebildete Stellelement zwischen der einwirkenden Verstellkraft und dem Positionierelement. Das Stellelement seinerseits ist wiederum durch Führungsteile an der Trageinheit gelagert, wobei diese Führungsteile eine in senkrechter Richtung zur Transportebene gerichtete Verstellung des Positionierelements im Zusammenwirken mit dem Stellelement ermöglichen. Durch die dem Stellelement zugeordneten Druckfedern wird dieses stets in die Verriegelungs- bzw. Positionierstellung gedrückt, wobei ein Lösen nur durch eine in entgegen gesetzter Kraftrichtung wirkende Verstellkraft bzw. entsprechende Hebelwirkung ermöglicht wird. Dadurch ist ein ungewolltes Lösen der Positionier- und Verriegelungsvorrichtung gesichert verhindert.

Vorteilhaft ist auch eine Ausbildung nach Anspruch 61, da dadurch eine Betätigung der Positionier- und Verriegelungsvorrichtung von außerhalb der Trageinheit bzw. des Teileträgers erfolgen kann und dadurch der Transportweg der Förderkette ungehindert beibehalten werden kann.

Schließlich ist aber auch eine Ausbildung wie im Anspruch 62 beschrieben möglich, da dadurch stets die exakte Lage der Positionier- und Verriegelungsvorrichtung überwacht werden kann und so Fehlstellungen bzw. eine fehlerhafte Verriegelung erkannt und damit Schäden durch Kollisionen oder ähnliches in weiterer Folge vermieden werden können.

Die Aufgabe der Erfindung wird aber unabhängig davon auch durch ein Verfahren zum Umsetzen eines Teileträgers in einer Transportanlage mittels einer Übergabeeinrichtung gemäß den im Anspruch 63 angegebenen Merkmalen gelöst. Die sich aus der Merkmalskombination des Kennzeichenteils dieses Anspruches ergebenden Vorteile liegen darin, dass die Übergabe des Teileträgers zwischen den beiden Führungsbahnen im Bereich der Übergabeeinrichtung in einem zumindest zweistufigen Arbeitstakt erfolgt. So wird beim Transport des Teileträgers ausgehend von der ersten Führungsbahn dieser so lange entlang transportiert, bis sich der Teileträger in der Übergabeposition befindet und anschließend für eine sehr kurze Zeitspanne der erste Förderabschnitt in Eingriff mit dem Teileträger gebracht und dabei von der ersten Führungsbahn hin zur Übergabeeinrichtung verfahren wird. Dieser Weg ist nur so weit wie unbedingt notwendig gewählt, wobei unmittelbar nach dem Erreichen dieser Zwischenposition der erste Förderabschnitt in seine Ruhestellung zurück verstellt wird. Dadurch ist ein ungehindertes weiteres Verfahren der Teileträger im Bereich der ersten Führungsbahn nach einem sehr kurzen Zeitraum wiederum möglich, wobei so z.B. in den dem ersten Förderabschnitt zugeordneten Arbeitsstationen unterschiedlichste Arbeits-, Füge-, Bearbeitungs- oder Montagevorgänge durchgeführt werden können, ohne dass im Bereich der Übergabeeinrichtung eine hohe Verweildauer notwendig ist. Gleiches gilt aber auch beim Umsetzen des Teileträgers von der weiteren Führungsbahn hin zur ersten Führungsbahn. Dabei wird der Teileträger durch den zweiten Förderabschnitt in die Zwischenposition im Bereich der Übergabeeinrichtung verfahren und kann bei Bedarf mittels des ersten Förderabschnitts bei sich in der Übergabeposition befindlicher Trageinheit auf diese hin verfahren werden. Damit wird auch hier jene Zeitdauer für den Übergabevorgang wiederum sehr kurz gehalten, da der Teileträger durch den voneinander getrennten Eingriff der Förderabschnitte zuerst in die Zwischenposition an der Übergabeeinrichtung verfahren wird, welche unmittelbar benachbart zur ersten Führungsbahn angeordnet ist, ohne dass dabei das Verfahren der Teileträger im Bereich der ersten Führungsbahn beeinträchtigt wird. Ist nun der die den Teileträger aufnehmende Trageinheit in die Übergabeposition verfahren worden, wird der erste Förderabschnitt in Eingriff mit dem Teileträger gebracht und auf kürzestem Weg bei geringsten Zeitbedarf auf den Teileträger verfahren. Unmittelbar darauf kann der erste Förderabschnitt wieder in seine Ruheposition verstellt werden und es kann bereits nach kürzester Zeitdauer das Verfahren der Teileträger im Bereich der ersten Führungsbahn fortgesetzt werden. Damit sind kürzere Taktzeiten für das Umsetzen der Teileträger erzielbar, wobei so die Stillstandszeiten im Bereich weiterer Arbeitsstationen ebenfalls verkürzt werden.

Weiters ist ein Vorgehen gemäß den im Anspruch 64 angegebenen Merkmalen vorteilhaft, weil dadurch stets der Teileträger relativ gegenüber der Trageinheit in einer exakt vorbestimmbaren Position daran festgelegt ist, wobei diese Verriegelung bedarfsweise lösbar ausgebildet ist. Dadurch kann trotz der Vielzahl von Verfahrmöglichkeiten in den einzelnen Arbeitsstationen eine eindeutige Vorpositionierung der Teileträger relativ zur Trageinheit bzw. des Transportsystems erfolgen. Dadurch wird eine hohe Genauigkeit bei den einzelnen durchzuführenden Arbeitsstationen und damit eine hohe Qualität der zu bearbeitenden bzw. herzustellenden Teile bzw. Bauteile erzielt.

Schließlich ist auch eine Verfahrensvariante gemäß Anspruch 65 vorteilhaft, weil dadurch eine Lastabtragung von Bearbeitungs- und/oder Fügekräften, ausgehend von den Teileträgern hin auf die Trageinheiten erfolgt, ohne dass dabei die zusammenwirkenden Führungsorgane bzw. Führungsteile diesen Lasten ausgesetzt werden. Dadurch wird über einen langen Zeitraum eine hohe Führungsgenauigkeit zwischen dem Teileträger und der Trageinheit erzielt. Dabei kann eine Abstützung der Teileträger an den weiteren Führungselementen an der Trageinheit erfolgen. Bei entsprechender Abnützung können diese einfach ausgetauscht werden, wodurch wiederum sehr hohe Führungsgenauigkeiten über einen langen Zeitraum erzielbar sind.

Die Erfindung wird im nachfolgenden anhand der in den Zeichnungen dargestellten Ausführungsbeispiele näher erläutert.

Es zeigen:
- Fig. 1: eine Draufsicht auf eine Transportanlage mit zumindest einer Übergabeeinrich- tung, in vereinfachter schematischer Darstellung;
- Fig. 2: einen Teilabschnitt der Transportanlage im Bereich der Übergabeeinrichtung in Seitenansicht gemäß Pfeil II in Fig. 1, bei in Eingriffsstellung befindlichem ersten Förderabschnitt und in vergrößerter, schematisch vereinfachter Darstellung;
- Fig. 3: den Teilabschnitt der Transportanlage nach Fig. 2, jedoch bei sich in Ruhestellung befindlichem ersten Förderabschnitt;
- Fig. 4: den Teilabschnitt der Transportanlage nach den Fig. 2 und 3, jedoch in einer ent- gegen gesetzten Ansichtsrichtung zur Fig. 2;
- Fig. 5: den Teilabschnitt der Transportanlage nach den Fig. 2 bis 4 in Draufsicht und ver- einfachter schematischer Darstellung;
- Fig. 6: die Antriebs- und Verschwenkvorrichtung der Übergabeeinrichtung in Draufsicht, teilweise geschnitten und vereinfachter schematischer Darstellung;
- Fig. 7: den Teilabschnitt der Transportanlage nach Fig. 4, jedoch mit entfernter Halte- rung;
- Fig. 8: den Teileträger der Transportanlage in Ansicht und vereinfachter schematischer Darstellung;
- Fig. 9: den Teileträger der Transportanlage in Unteransicht und vereinfachter schemati- scher Darstellung;
- Fig. 10: die Trageinheit der Transportanlage in Draufsicht und vereinfachter schematischer Darstellung;
- Fig. 11: die Trageinheit der Transportanlage in Seitenansicht geschnitten, gemäß den Li- nien XI - XI in Fig. 10;
- Fig. 12: die Trageinheit der Transportanlage in Ansicht, gemäß Pfeil XII in Fig. 10 und schematisch vereinfachter Darstellung;
- Fig. 13: einen Teilbereich einer Transportanlage mit einer anderen Übergabeeinrichtung, in schaubildlich vereinfachter Darstellung;
- Fig. 14: eine weitere mögliche Ausbildung einer Stellvorrichtung für die Förderabschnitte in Seitenansicht gemäß Pfeil XIV in Fig. 13, in schaubildlich vereinfachter Dar- stellung;
- Fig. 15: eine Trageinheit mit zusätzlich daran angeordneten Stützauflagen für den Teile- träger, in schaubildlich vereinfachter Darstellung;
- Fig. 16: die Trageinheit nach Fig. 15 mit einem darauf angeordneten Teileträger in Ansicht und vereinfachter Darstellung;
- Fig. 17: einen Teilbereich der Trageinheit sowie des Teileträgers nach Fig. 16 in vergrö- ßertem Maßstab.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

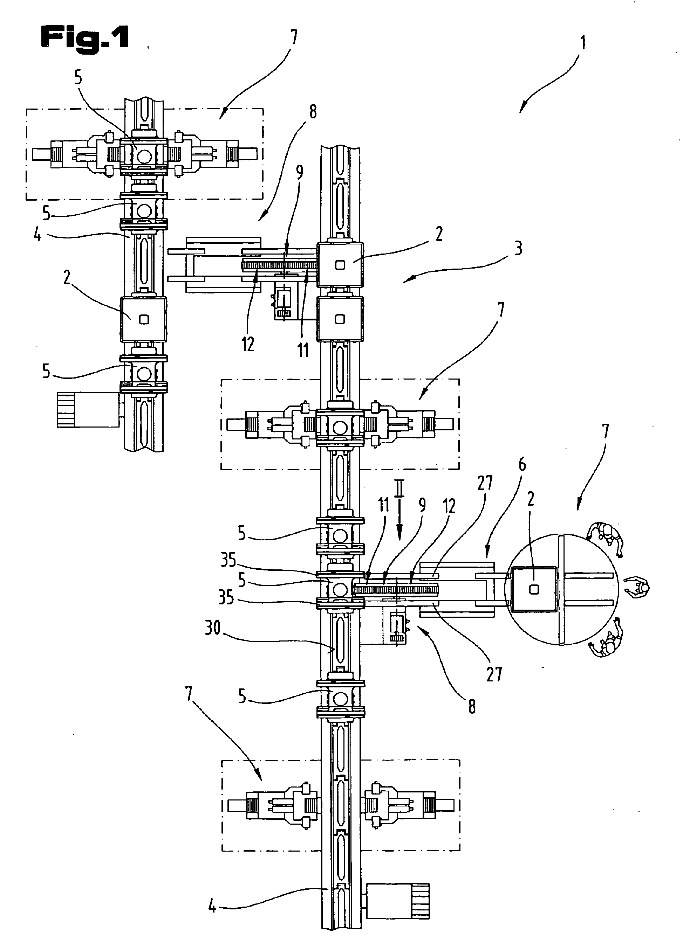

In der Fig. 1 ist vereinfacht eine Transportanlage 1 für Teileträger 2 gezeigt, wobei die Transportanlage 1 zumindest ein Transportsystem 3 umfasst, welches seinerseits eine erste Führungsbahn 4 ausbildet. Weiters umfasst das Transportsystem 3 entlang seiner ersten Führungsbahn 4 zumindest eine verfahrbare Trageinheit 5 für den Teileträger 2. Bei einer Vorschubbewegung bzw. Längsbewegung der Trageinheit 5 entlang der ersten Führungsbahn 4 definiert bzw. umgrenzt diese ein Lichtraumprofil. Dieses Lichtraumprofil stellt jenen Umriss bzw. Platzbedarf dar, welchen die Trageinheit 5 sowie gegebenenfalls der der daran gehalterte Teileträger 2 benötigt, um nicht mit anderen Bauteilen bzw. Ein- oder Vorrichtungen während seiner Vorschubbewegung zu kollidieren.

Die Transportanlage 1 umfasst zumindest eine weitere Führungsbahn 6, welche von der ersten Führungsbahn 4 distanziert sowie gegebenenfalls quer zu dieser ausgerichtet ist. Diese weitere Führungsbahn 6 ist im vorliegenden Ausführungsbeispiel quer, insbesondere rechtwinkelig, zur ersten Führungsbahn 4 ausgerichtet und ist bei dem gezeigten Beispiel an der rechten Seiten der ersten Führungsbahn 4 angeordnet. Diese weitere Führungsbahn 6 kann beispielsweise eine Arbeitsstation 7, wie beispielsweise einen Handarbeitsplatz, ausbilden bzw. in diesen münden.

Innerhalb derartiger Transportanlagen 1 können beispielsweise einzelne Teile miteinander zu einer Baugruppe gefügt, bearbeitet, miteinander verbunden bis hin zur Herstellung eines Halbzeuges bzw. eines fertigen Gegenstandes in einer Vielzahl von Arbeitsstationen 7 transportiert und gefördert werden. Dabei kann auch eine reine spannlose Formgebung sowie Verformung einzelner Bauteile in den Arbeitsstationen 7 erfolgen. Die Arbeitsstationen 7 sind nur schematisch vereinfacht angedeutet, wobei die einzelne Ausbildung von den zu bearbeitenden Einzelteilen bzw. Bauteilen abhängig ist.

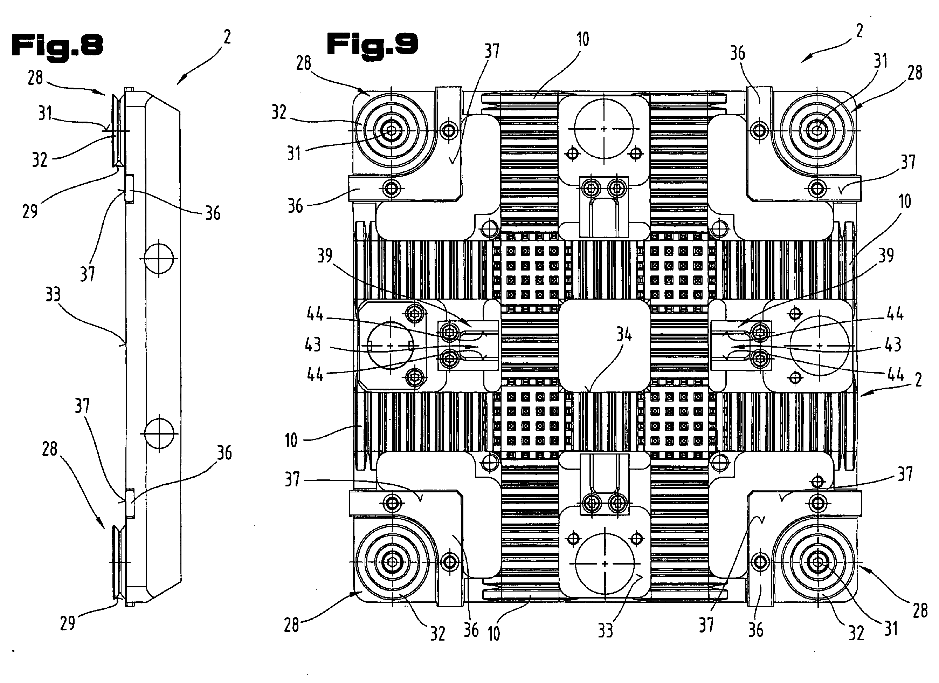

Um den Teileträger 2 zwischen den beiden Führungsbahnen 4, 6 umsetzen zu können, ist hier vereinfacht eine Übergabeeinrichtung 8 gezeigt, welche zwischen den beiden Führungsbahnen 4, 6 angeordnet ist. Die Übergabeeinrichtung 8 umfasst ihrerseits zumindest eine Vorschubvorrichtung 9 für den Teileträger 2, wobei die Vorschubvorrichtung 9 mit am Teileträger 2 angeordneten, jedoch hier nicht näher dargestellten Eingriffselementen 10 - siehe Fig. 9 - für die Verstell- bzw. Verschiebebewegung in Eingriff bringbar ist.

Das hier dargestellte Transportsystem 3 kann zur Bearbeitung und/oder Montage von Bauteilen dienen, wie dies beispielsweise unter anderem in der AT 406 351 B beschrieben ist. Dabei sind auf den Teileträgern 2 bzw. Werkstückträgern Aufnahmen zur Halterung der Bauteile vorgesehen. Diese können mit einer, hier nicht näher dargestellten Transportkette als Vorschubantrieb verbunden sein. Im Gehäuseteil des Transportsystems 3 sind Führungseinrichtungen mit Führungsbahnen für die Transportkette angeordnet. Die einzelnen Gehäuseteile sind untereinander sowie mit einer eigenen Umlenkstation für die Transportkette über Führungs- und/oder Kupplungsvorrichtungen zu einer Gehäuseeinheit miteinander verbunden. Diese Gehäuseeinheit ist über Stützvorrichtungen auf einer Aufstandsfläche abgestützt. Dabei kann die Gehäuseeinheit mehrere einstückige, gleichartig ausgebildete selbsttragende Gehäuseteile umfassen, wobei jeder der Gehäuseteile zumindest zwei parallel zueinander verlaufende Führungsbahnen für einen gezogenen und einen rücklaufenden Strang der Transportkette umfasst. Durch die durchlaufende Transportkette wird hierbei ein verkettetes, zusammenhängendes Transportsystem 3 ausgebildet, wobei in gewissen Arbeitstakten bzw. Arbeitsschritten die Verstellung der Trageeinheiten 5 mitsamt der daran angeordneten Teileträger 2 zwischen den einzelnen Arbeitsstationen 7 erfolgt.

Durch die zuvor beschriebene starre Verkettung der am Transportsystem 3 angeordneten Teileträger 2, welche hier unter Zwischenschaltung der Trageinheit 5 mit den nicht näher dargestellten Transportketten in Verbindung stehen, sind die Arbeitsschritte in den einzelnen Arbeitsstationen entsprechend aufeinander abzustimmen. Um kurze Taktzeiten des Weitertransportes zwischen den einzelnen Arbeitsstationen zu erzielen, ist es notwendig auch im Bereich der Übergabeeinrichtungen 8 eine ausreichende Optimierung für das Um- bzw. Übersetzen zwischen den einzelnen Führungsbahnen 4, 6 zu erzielen. Dazu weist die der Übergabeeinrichtung 8 zugeordnete Vorschubvorrichtung 9 hier einen ersten sowie einen zweiten Förderabschnitt 11, 12 auf. Bei diesem hier gezeigten Ausführungsbeispiel ist der erste Förderabschnitt 11 der ersten Führungsbahn 4 des Transportsystems 3 zugewendet. Zur Durchführung der Vorschubbewegung des Teileträgers 2 ist der erste Förderabschnitt 11 mit den am Teileträger 2 angeordneten Eingriffselementen 10 in Eingriff bringbar. Dabei spricht man von einer so genannten Eingriffstellung zwischen dem Förderabschnitt 11 und den Eingriffselementen 10. Weiters kann der erste Förderabschnitt 11 in eine weitere Stellung verbracht werden, in der sich der erste Förderabschnitt 11 außer Eingriff mit den am Teileträger 2 angeordneten Eingriffselementen befindet. Hierbei handelt es sich um eine so genannte Ruhestellung. Dabei ist nun vorgesehen, dass der erste Förderabschnitt 11 in dessen Eingriffsstellung zumindest bereichsweise in das Lichtraumprofil der Trageinheit 5 für den Teileträger 2 hineinragt und in der Ruhestellung der erste Förderabschnitt 11 in einer Position außerhalb des Lichtraumprofils der Trageinheit 5 angeordnet ist. Die detaillierte Beschreibung mit den dazugehörigen Abbildungen erfolgt in den nachfolgenden Figuren.

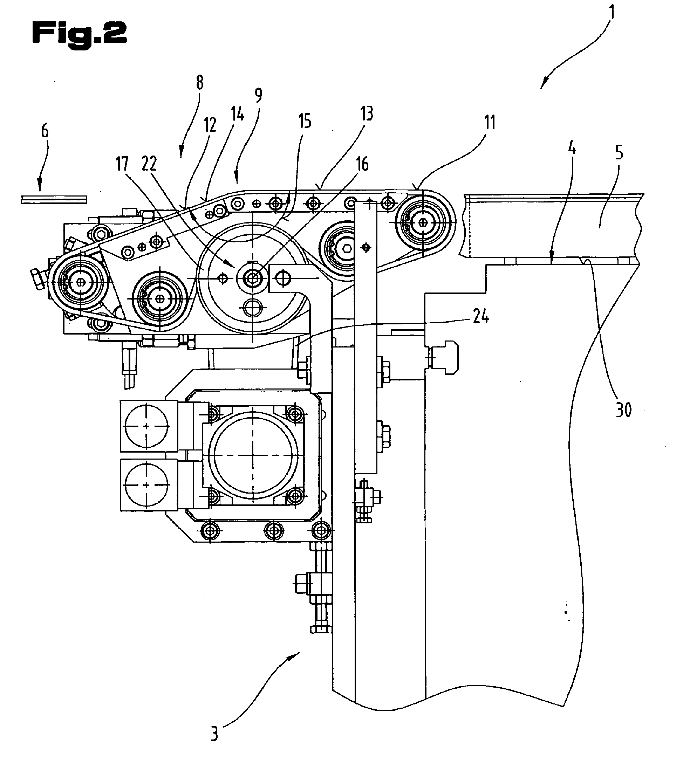

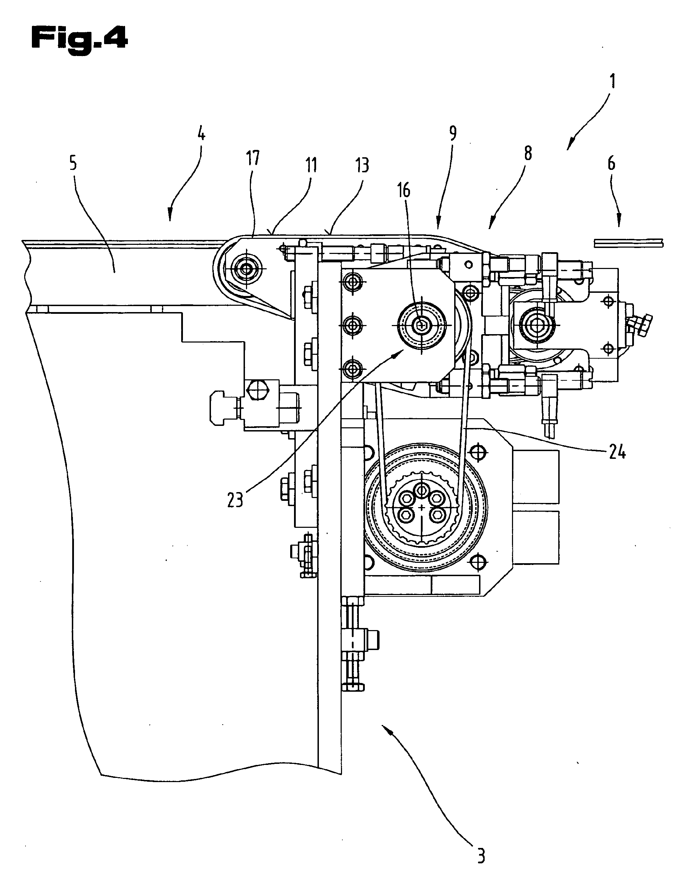

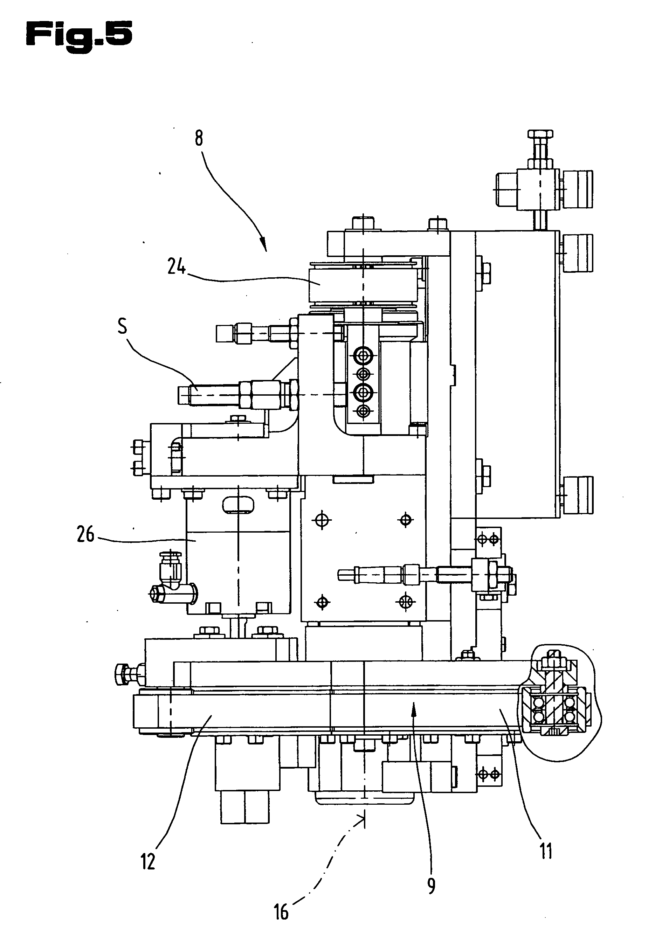

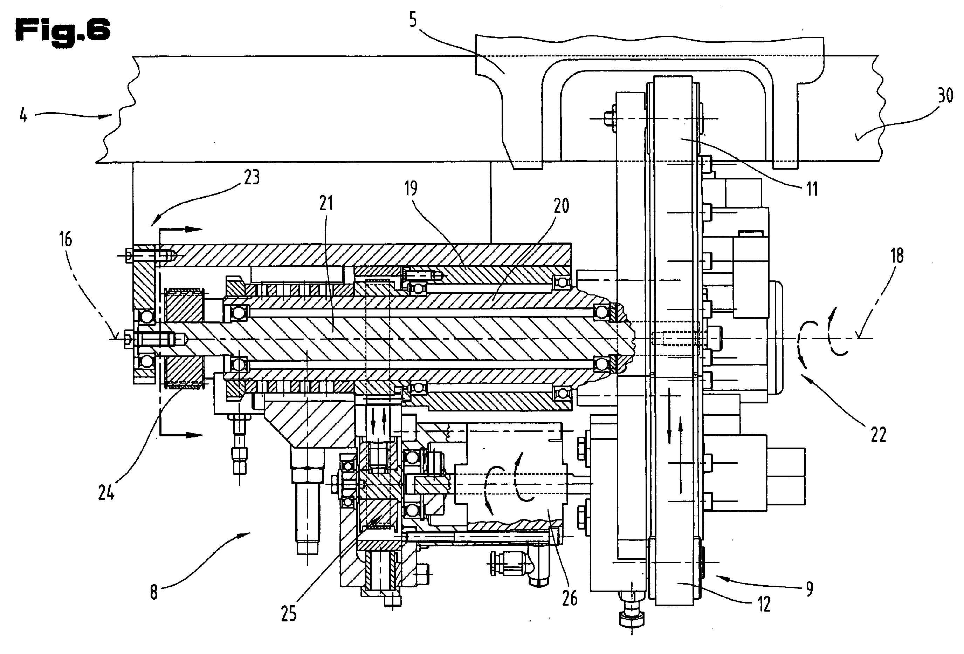

Wie nun aus den Fig. 2 bis 12 zu ersehen ist, ist bei diesem hier gezeigten Ausführungsbeispiel die Übergabeeinrichtung 8 seitlich zur ersten Führungsbahn 4 des Transportsystems 3 an diesem angeordnet und dabei entsprechend der Teilung der Förderkette dazu ausgerichtet bzw. ausrichtbar, um eine exakte Umsetzung bzw. Übergabe zwischen den beiden Führungsbahnen 4, 6 im Hinblick auf die weiteren Arbeitsstationen 7 sicher zu stellen.

Bei der in der Fig. 2 gezeigten Position der Übergabeeinrichtung 8 befindet sich diese mit ihrem ersten Förderabschnitt 11 in der Eingriffstellung zum Übernehmen und/oder Übergeben eines Teileträgers 2 von und/oder zur Führungsbahn 4. In dieser Darstellung ist der der ersten Führungsbahn 4 zugewendete erste Förderabschnitt 11 in etwa parallel verlaufend zur ersten Führungsbahn 4 ausgerichtet und bildet in dieser Stellung eine erste Förderebene 13 aus. Der zweite Förderabschnitt 12 bildet eine weitere bzw. zweite Förderebene 14 aus. Dabei können der oder die Förderabschnitte 11, 12 der Vorschubvorrichtung 9 durch ein Transportorgan, wie beispielsweise ein endlos umlaufendes Zugmittel oder eine Rollenbahn gebildet sein. Weiters sind die beiden Förderabschnitte 11, 12 in Transportrichtung der Vorschubvorrichtung 9 unmittelbar hintereinander angeordnet. Bei diesem hier gezeigten Ausführungsbeispiel schließen die beiden Förderebenen 13, 14 der beiden Förderabschnitte 11, 12 einen stumpfen Winkel 15 ein. Dabei ist der Winkel 15 zwischen den Förderebenen 13, 14 auf der vom Fördergut bzw. vom Teileträger 2 abgewendeten Seite gemessen.

Die beiden unmittelbar hintereinander angeordneten Förderabschnitte 11, 12 sind bei diesem Ausführungsbeispiel durch ein gemeinsames, durchlaufend ausgebildetes Transportorgan, wie beispielsweise einen Zahnriemen, einen Flachriemen, einen Keilriemen oder dergleichen gebildet.

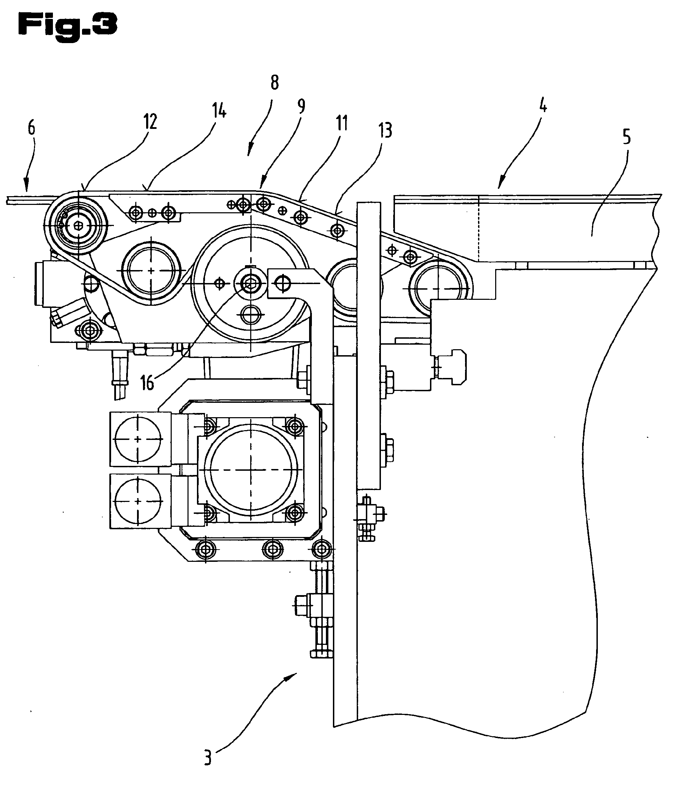

Zur Verstellung der beiden Förderabschnitte 11, 12 zwischen deren Ruhestellung und deren Eingriffstellung, sind die beiden Förderabschnitte 11, 12 um eine gemeinsame Schwenkachse 16 jeweils zwischen den beiden Stellungen verlagerbar ausgebildet. Dadurch, dass die beiden Förderabschnitte 11, 12 hier an einem gemeinsamen Tragteil 63, dem auch die Schwenkachse 16 zugeordnet ist, ausgebildet sind, kann bei Verstellung des ersten Förderabschnittes 11 von seiner Ruhestellung in seine Eingriffsstellung der zweite Förderabschnitt 12 gleichzeitig in seine Ruhestellung verstellt werden. Dadurch wird ein kontinuierliches Umsetzen des Teileträgers 2 zwischen den beiden Führungsbahnen 4, 6 ermöglicht. Diese dem Tragteil 63 zugeordnete Schwenkachse 16 ist bei dem hier gezeigten Ausführungsbeispiel parallel sowie in Transportrichtung der Führungsbahn 4 erstreckend ausgerichtet. Dadurch können die beiden Förderabschnitte 11, 12 gleichzeitig und gemeinsam auf einfache Art und Weise zwischen ihren Ruhestellungen und Eingriffsstellungen verlagert werden. Befindet sich der erste Förderabschnitt 11 in seiner Ruhestellung - siehe Fig. 3 - befindet sich der zweite Förderabschnitt 12 in seiner Eingriffsstellung. Aufgrund dieser gemeinsam durchgeführten Schwenkbewegung ist nunmehr die zweite Förderebene 14 des zweiten Förderabschnitts 12 in deren Eingriffsstellung in etwa parallel zur ersten Führungsbahn 4 bzw. deren Transportebene ausgerichtet. Befindet sich hingegen der zweite Förderabschnitt 12 in seiner Ruhestellung, befindet sich der erste Förderabschnitt 11 mit seiner ersten Förderebene 13 in seiner Eingriffsstellung mit dem zu transportierenden Teileträger 2. Der Tragteil 63 kann dabei auch als Wippe bezeichnet werden, welche die Verstellbewegung der Förderabschnitte 11, 12 um die Schwenkachse 16 durchführt.

Wie nun aus einer Zusammenschau der Fig. 2 und 3 zu ersehen ist, ist der erste Förderabschnitt 11 in seiner Ruhestellung unterhalb des Lichtraumsprofils der Trageinheit 5 angeordnet. Dadurch ist ein ungehinderter Transport bzw. eine Vorschubbewegung der an den Transportketten angeordneten Trageinheiten 5 mit den gegebenenfalls darauf angeordneten Teileträgem 2 in Richtung der ersten Führungsbahn 4 möglich, ohne dass die Vorschubvorrichtung 9 bzw. deren erster Förderabschnitt 11 eine Behinderung darstellen würde.

Die Schwenkachse 16 ist bezogen auf die Vorschubvorrichtung 9 in senkrechter Richtung zur Vorschubrichtung der Förderabschnitte 11, 12, sowie in paralleler Richtung zur Förderebene 13, 14 im Bereich der Förderabschnitte 11, 12 ausgerichtet.

Während dem getakteten Betrieb des Transportsystems 3 werden die Trageinheiten 5 durch die Verbindung mit der oder den Transportketten entlang der ersten Führungsbahn 4 jeweils gleichzeitig verfahren und damit zwischen den einzelnen Arbeitsstationen 7 gleichzeitig verstellt. Während dieser Verstell- bzw. Verfahrbewegung befindet sich der erste Förderabschnitt 11 in seiner Ruhestellung, also außerhalb des Lichtraumprofils der Trageinheit 5, um so den Längstransport nicht zu behindern. Somit befindet sich vor sowie während dem Verfahren der Trageinheiten 5 entlang der ersten Führungsbahn 4 der erste, dem Transportsystem 3 zugewendete Förderabschnitt 11 der Vorschubvorrichtung 9 in seiner Ruhestellung außerhalb des Lichtraumprofils der Trageinheit 5.

Vor dem Ausschleusen des Teileträgers 2 vom Transportsystem 3 an die weitere Führungsbahn 6 wird die Trageinheit 5 mit dem Teileträger 2 durch das Transportsystem 3 in eine Übergabeposition bezüglich der Übergabeeinrichtung 8 verfahren und in dieser Übergabeposition angehalten. Anschließend daran wird der erste Förderabschnitt 11 der Vorschubvorrichtung 9 in seine Eingriffsstellung innerhalb des Lichtraumprofils der Trageinheit 5 verstellt und dabei in Eingriff mit den Eingriffselementen 10 des Teileträgers 2 gebracht, wobei bei Betätigung der Vorschubvorrichtung 9 der Teileträger 2 von der Trageinheit 5 auf die Übergabeeinrichtung 8 verfahren wird. Unmittelbar darauf wird der erste Förderabschnitt 11 der Vorschubvorrichtung 9 wieder in seine Ruhestellung außerhalb des Lichtraumprofils der Trageinheit 5 verstellt und dabei die Eingriffselemente 10 des Teileträgers 2 mit dem zweiten Förderabschnitt 12 der Vorschubvorrichtung 9 in Eingriff gebracht. Bei weiterer Betätigung der Vorschubvorrichtung 9 wird der Teileträger 2 von der Übergabeeinrichtung 8 auf die weitere Führungsbahn 6 verfahren. Wird ein durchlaufendes, endlos ausgebildetes Transport- bzw. Zugmittel in Verbindung mit dem gemeinsamen Tragteil 63 verwendet, kann ein kontinuierlicher Umsetzvorgang zwischen den beiden Führungsbahnen 4, 6 durch die Übergabeeinrichtung 8 erzielt werden. Bei entsprechender Kombination der Transportbewegung des Transportorgans der Förderabschnitte 11, 12 sowie der Verstell- bzw. Schwenkbewegung des diesen zugeordneten gemeinsamen Tragteils 63 steht das Transportorgan mit dem umzusetzenden Teileträger 2 in ununterbrochenen Eingriff. Dadurch ist jeweils nur eine kurze Eingriffszeit des ersten Förderabschnitts 11 notwendig um den Teileträger 2 von der Trageinheit 5 in den Bereich der Übergabeeinrichtung 8 zu verfahren. Bereits nach kurzem Verstellweg bzw. Verfahrweg kann der erste Förderabschnitt 11 wieder in seine Ruhestellung verstellt werden, wobei unmittelbar daran anschließend das Lichtraumprofil der Trageinheit 5 vom ersten Förderabschnitt 11 frei gegeben wird und eine weitere Vorschubbewegung der Trageinheiten 5 entlang der ersten Führungsbahn 4 ermöglicht wird.

Beim Einschleusen des Teileträgers 2 von der zweiten Führungsbahn 6 zur ersten Führungsbahn 4 des Transportsystems 3 werden die Eingriffselemente 10 des Teileträgers 2 mit dem zweiten Förderabschnitt 12 der Vorschubvorrichtung 9 in Eingriff gebracht und bei Betätigung der Vorschubvorrichtung 9 wird der Teileträger 2 zur Übergabeeinrichtung 8 verfahren. Während dieses Beginns der Umsetzbewegung können die Trageinheiten 5 durch die Transportketten entlang der ersten Führungsbahn 4 noch ungehindert verstellt werden, da sich der erste Förderabschnitt 11 in seiner Ruhestellung - also außerhalb des Lichtraumprofils der Trageinheit 5 - befindet. In dieser vorbereiteten Übergabeposition des Teileträgers 2 verbleibt diese solange in dieser Position an der Übergabeeinrichtung 8, bis eine entsprechende Trageinheit 5 durch das Transportsystem 3 in die entsprechende Übergabeposition zur Übergabeeinrichtung 8 verfahren und in dieser Übergabeposition positioniert angehalten wird. Befindet sich die Trageinheit 5 zur Aufnahme des Teileträgers 2 in der vorbestimmten Übergabeposition, wird der erste Förderabschnitt 11 der Vorschubvorrichtung 9 in seine Eingriffsstellung und damit innerhalb des Lichtraumprofils der Trageinheit 5 verstellt. Dabei wird der erste Förderabschnitt 11 in Eingriff mit den Eingriffselementen 10 am Teileträger 2 gebracht. Bei Betätigung der Vorschubvorrichtung 9 wird der Teileträger 2 von der Übergabeeinrichtung 8 auf die Trageinheit 5 verfahren. Unmittelbar darauf wird der erste Förderabschnitt 11 der Vorschubvorrichtung 9 wiederum in die Ruhestellung außerhalb des Lichtraumprofils der Trageinheit 5 zurückverstellt, wodurch in kürzester Zeit eine Weiterbewegung der Trageinheiten 5 entlang der ersten Führungsbahn 4 durch das Transportsystem 3 ermöglicht wird.

Wie aus einer Zusammenschau der Fig. 2 bis 7 zu ersehen ist, ist dem Transportorgan der Vorschubvorrichtung 9 zumindest ein erstes Antriebsorgan 17 zugeordnet, wobei eine Drehachse 18 des Antriebsorgans 17 und die Schwenkachse 16 für die Förderabschnitt 11, 12 in einer gemeinsamen Achse angeordnet sind. Weiters umfasst die Vorschubvorrichtung 9 ein Grundgehäuse 19, welches beispielsweise über Kugellager ein eigenes Traggehäuse 20 lagert, wobei dieses Traggehäuse 20 im vorliegenden Ausführungsbeispiel Stützteile bzw. Lagerteile für das Transportorgan bzw. dessen Förderabschnitte 11, 12 lagert. Innerhalb des Traggehäuses 20 ist weiters eine Antriebswelle 21 für das erste Antriebsorgan 17 gelagert, wobei die Antriebswelle im vorliegenden Ausführungsbeispiel das Traggehäuse 20 durchsetzt und beidseitig das Traggehäuse 20 mit einem ersten sowie weiteren Ende 22, 23 überragt. Bei diesem hier gezeigten Ausführungsbeispiel ist am ersten Ende 22 der Antriebswelle 21 das Antriebsorgan 17 für das Transportorgan angeordnet und steht mit diesem in Antriebsverbindung. Dabei kann das Antriebsorgan 17 beispielsweise durch ein Zahnrad gebildet sein, welches vom Transportorgan über den Umfang gesehen zumindest teilweise umschlungen wird.

Am weiteren vom ersten Ende 22 abgewandeten Ende 23 der Antriebswelle 21 ist ein weiteres Antriebsorgan vorgesehen, über welches das Antriebsmoment beispielsweise über einen Antriebsmotor auf die Antriebswelle 21 und in weiterer Folge auf das erste Antriebsorgan 17 und damit auf das Transportorgan übertragen wird. Weiters ist dem Traggehäuse 20 ein Stellantrieb 25 zugeordnet, mit welchem die damit in Verbindung stehenden Förderabschnitte 11, 12 zwischen ihren beiden Stellungen - Eingriffstellung und Ruhestellung - verstellbar sind. Dieser Stellantrieb 25 kann beispielsweise durch einen vereinfacht dargestellten Motor 26 gebildet sein, der in Antriebsverbindung mit am Traggehäuse 20 angeordneten Antriebsmitteln steht. Diese Antriebsmittel können beispielsweise durch miteinander in Eingriff stehende Zahnräder bzw. aber auch zwischen Antriebsrädern, insbesondere Zahnrädern, angeordnete Riemenverbindungen gebildet sein, wie dies aus dem Stand der Technik hinlänglich bekannt ist. Bei Verwendung von Zahnriemen kann eine sehr exakte Verschwenkbewegung sichergestellt werden. Es könnte aber der Stellantrieb 25 durch einen Schwenkflügelmotor oder einen Drehflügelschwenkantrieb gebildet sein, wobei der Antrieb auch auf pneumatischer oder hydraulischer Basis erfolgen kann.

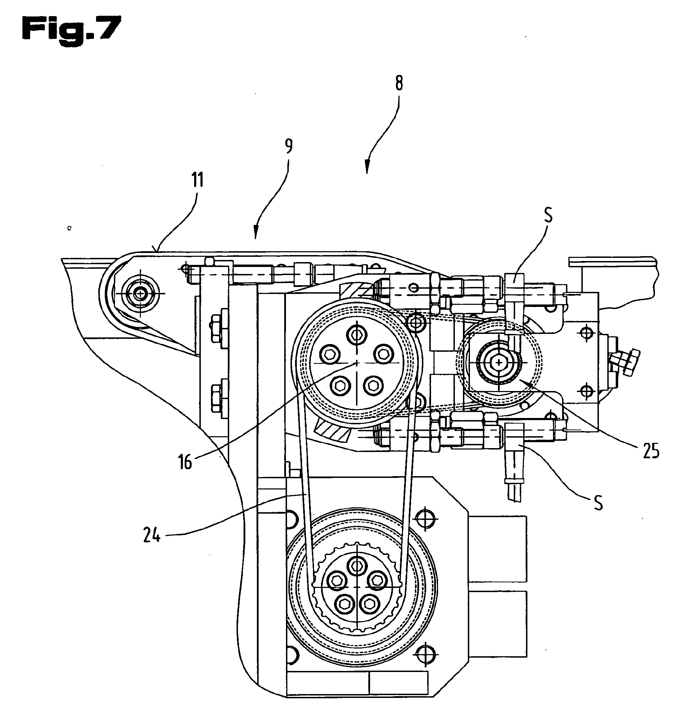

Zur Begrenzung der Schwenkbewegung der Förderabschnitte 11, 12 bzw. des diesen zugeordneten Tragteils 63 sind hier zwischen dem Traggehäuse 20 und dem Grundgehäuse 19 Mittel vorgesehen, durch welche die Lage bzw. die Positionen der Förderabschnitte 11, 12 in deren Eingriffsstellung und/oder Ruhestellung und somit in ihren Endlagen definiert sind. Diese Mittel können beispielsweise durch entsprechende Anschläge mit entsprechender Justiermöglichkeit gebildet sein. Vorteilhaft ist es auch, wenn den Mitteln zur Begrenzung der Schwenkbewegung beim Erreichen ihrer Endlagen jeweils an zumindest einem der Gehäuse - Grundgehäuse 19 und/oder Traggehäuse 20 - ein Dämpfungselement, wie beispielsweise Stoßdämpfer, zugeordnet ist. Weiters ist es vorteilhaft, wenn den Mitteln zur Begrenzung der Schwenkbewegung beim Erreichen zumindest einer ihrer Endlagen jeweils ein Sensor zugeordnet ist, um so eine Überwachung der Stellungen der Förderabschnitte 11, 12 zur automatisierten Steuerung der Transportanlage 1 durchführen zu können. Dies ist vereinfacht in der Fig. 7 dargestellt, wobei das hier oberhalb der Schwenkachse 16 angeordnete Anschlagmittel des Traggehäuses 20 in Anschlagstellung gezeigt ist. Das weitere hier unterhalb der Schwenkachse 16 angeordnete weitere Anschlagmittel ist noch vom Anschlag distanziert und kommt erst bei Verschwenkung des zweiten Förderabschnittes 12 in seine Eingriffsstellung zur Anlage am weiteren Anschlag.

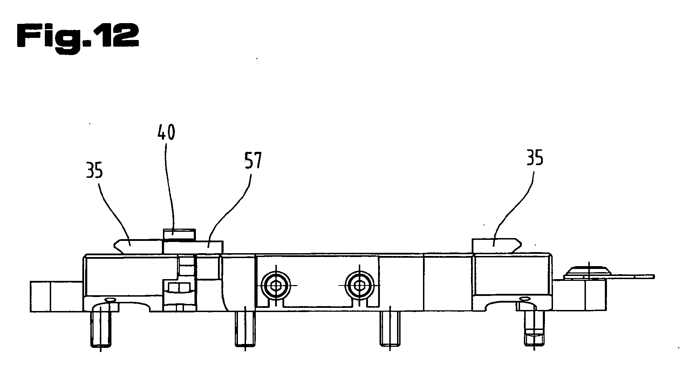

Um im Bereich der Übergabeeinrichtung 8, insbesondere im Bereich der Förderabschnitte 11, 12, für den Teileträger 2 eine eindeutige Führungsbahn zu bilden, sind hier quer zur Vorschubrichtung der Vorschubvorrichtung 9 voneinander distanzierte sowie sich in Förderrichtung erstreckende Führungselemente 27 vorgesehen. Diese sind bevorzugt durch Führungsleisten gebildet, welche an in Förderrichtung gesehen an voneinander abgewendeten Seiten jeweils einen V-förmig ausgebildeten und in entgegen gesetzter Richtung zusammen laufenden Querschnitt aufweisen. Diese Ausbildung ist in der nachfolgenden Fig. 12 auch für die dort angeordneten weiteren Führungselemente 35 vereinfacht dargestellt.

Wie nun besser aus einer Zusammenschau der Fig. 8 und 9 für den Teileträger 2 zu ersehen ist, weist dieser an seiner Unterseite, also jener Seite, welche den Führungsbahnen 4, 6 bzw. der Trageinheit 5 zugewendet ist, Führungsorgane 28 mit einer am Außenumfang angeordneten nutförmigen Vertiefung 29 zur Höhen- und/oder Seitenführung auf. Diese Führungsorgane 28 können beispielsweise durch um senkrecht zu einer Transportebene 30 - siehe Fig. 1 - ausgerichtete Achsen 31 und daran angeordnete rotierende Führungsrollen 32 gebildet sein. Dabei ist bevorzugt die nutförmige Vertiefung 29 der Führungsorgane 28 gegengleich zum V-förmig ausgebildeten Querschnitt der Führungselemente 27, insbesondere der Führungsleisten, ausgebildet.

Die Führungsorgane 28 sind am Teileträger 2 an einander gegenüberliegenden Seiten jeweils in Eckbereichen angeordnet, wobei die Führungsorgane 28 zumindest im Bereich der Förderabschnitte 11, 12 mit den dort vorgesehenen Führungselementen 27 zusammenwirken. Der Teileträger 2 ist bevorzugt quadratisch ausgebildet, wobei die Führungsorgane 28 bzw. die diese bildenden Führungsrollen 32 auf einer der Transportebene 30 zugewandten Unterseite 33 am Teileträger 2 angeordnet sind.

Weiters ist es vorteilhaft, wenn der Teileträger 2 zumindest eine in senkrechter Richtung bezüglich der Transportebene 30 durchdringende Durchsetzung 34 aufweist, wobei diese Durchsetzung 34 bevorzugt im Zentrum des Teileträgers 2 angeordnet ist. Unabhängig davon wäre es aber auch möglich, die Durchsetzung 34 nicht nur im Zentrum des Teileträgers 2 sondern auch mehrere derselben im Bereich von Diagonalen des Teileträgers 2 anzuordnen. Gleichfalls wäre aber auch eine Kombination der Anordnungsmöglichkeiten denkbar.

Die bereits zuvor in der Fig. 1 kurz beschriebenen Eingriffselemente 10 am Teileträger 2 sind hier besser zu ersehen und sind zueinander kreuzförmig sowie durch das Zentrum und desselben verlaufend angeordnet. Dadurch kann der Teileträger in seiner relativen Lage bezüglich der Führungsbahnen und damit verbunden in Bezug auf seine Orientierung sowohl längs als auch quer verfahren werden.

Zur Erzielung einer gesicherten Vorschubbewegung und dem damit verbundenen eindeutigen Bewegungsablauf des Teileträgers 2 stehen die Führungselemente 27 der Übergabeeinrichtung 8 zumindest im Bereich der Förderabschnitte 11, 12 mit den jeweils einander zugewendeten Seiten der Führungsorgane 28 des Teileträgers in Eingriff. An der Trageinheit 5 sind zur Aufnahme sowie Führung des Teileträgers 2 weitere Führungselemente 35 für die Führungsorgane 28 des Teileträgers 2 mit der nutförmigen Vertiefung 29 angeordnet, wobei diese in paralleler Richtung bezüglich der Ein- bzw. Ausschleusrichtung hin zur Übergabeeinrichtung 8 ausgerichtet sind. Dabei sind die weiteren Führungselemente 35 der Trageinheit 5 derart an dieser angeordnet, dass diese mit den jeweils einander zugewendeten Seiten der Führungsorgane 28 des Teileträgers 2 in Eingriff stehen. Dies bedeutet, dass diese weiteren Führungselemente 35 wiederum auf den voneinander abgewendeten Seiten jeweils einen V-förmig ausgebildeten und in entgegen gesetzter Richtung zusammenlaufenden Querschnitt aufweisen. Dadurch wird eine Platz sparende Anordnung der weiteren Führungselemente 35 bzw. der diese bildenden Führungsleisten an der Trageinheit 5 erzielt.

Zur Erzielung einer reibungslosen Übergabe- und/oder Übernahme des Teilträgers 2 von bzw. zur Trageinheit 5 ist es vorteilhaft, wenn die weiteren Führungselemente 35 der Trageinheit 5 das der Trageinheit 5 zugewendete Ende des ersten Förderabschnitts 11 der Vorschubvorrichtung 9 in Richtung auf den zweiten Förderabschnitt 12 hin überragen. Dadurch ist ein Übergreifen der Vorschubvorrichtung 9 während dem Transport des Teileträgers 2 und damit ein Eingriff mit den daran angeordneten Eingriffselementen 10 sichergestellt.

Wenn sich der Teileträger 2 mit seinen darauf angeordneten, jedoch hier nicht näher dargestellten, Bauteilen im Bereich einer Arbeitsstation 7 befindet, erfolgt eine Abtragung des Eigengewichtes, sowie der gegebenenfalls darauf wirkender Bearbeitungskräfte, ausgehend von den Führungsorganen 28 mit den darin angeordneten V-förmigen Vertiefungen 29 auf die weiteren Führungselemente 35. Dies kann zu Beschädigungen der Lageranordnung, der Führungsorgane 28 sowie der weiteren Führungselemente 35 führen. Dazu kann der Teileträger 2 bei einer sich an der Trageinheit 5 befindlichen Position und bei in Eingriff stehenden Führungsorganen 28 mit den weiteren Führungselementen 35 der Trageinheit 5 relativ gegenüber der Trageinheit 5 minimal in senkrechter Richtung bezüglich der Transportebene 30 angehoben und senkrechter Richtung bezüglich der Transportebene 30 an der Trageinheit 5 abgestützt werden. Dazu weist der Teileträger 2 an seiner der Trageinheit 5 zugewendeten Seite - also seiner Unterseite 33 - bereichsweise angeordnete Stützteile 36 auf, welche bevorzugt den Nahbereich der Führungsorgane 28 angeordnet sind. Diese Stützteile 36 sind, wie dies am besten aus der Fig. 9 zu ersehen ist, in etwa L-förmig ausgebildet und dienen zur Abtragung von Vertikallasten. Um eine längere exakte, höhenmäßige Abstützung sowie einen geringeren Verschleiß zu erzielen, sind die Stützteile 36 aus einem verschleißfesten, harten Werkstoff, wie beispielsweise aus der Gruppe von Hartmetall, Stahl, Keramik, Kunststoff bzw. einer Kombination daraus, gebildet. So können die Stützteile 36 im Bereich von Diagonalen des Teileträgers 2 angeordnet sein, wobei sich diese zwischen den Führungsorganen 28 und dem Zentrum des Teileträgers 2 befinden.

Um einen universellen und in alle Fahrt- bzw. Vorschubrichtungen möglichen Einsatz des Teileträgers 2 in Verbindung mit den Stützteilen 36 zu erzielen, sind dies in etwa L-förmig ausgebildet und bilden so jeweils kreuzförmig bzw. parallel zueinander verlaufenden Stützflächen 37 aus. Unabhängig oder zusätzlich dazu wäre es aber auch noch möglich, dass der Teileträger 2 über Stirnflächen der Achsen 31 der Führungsrollen 32 an der Trageinheit 5 abgestützt ist. In jedem Fall wird so der gesamte Teileträger 2 mit seinen Führungsorganen 28 so weit relativ zur Trageinheit 5 angehoben, dass die V-förmige Vertiefung 29 an den Führungsorganen 28 keine Lastübertragung auf die weiteren Führungselemente 35 an der Trageinheit 5 durchführen. Dadurch ist es möglich, höhere Druckkräfte in senkrechter Richtung, wie diese beispielsweise bei Füge- oder Bearbeitungsvorgängen vorkommen können, auf den Teileträger 2 übertragen zu können, ohne dass dabei die exakt zusammenwirkenden Führungsorgane 28 mit den weiteren Führungselementen 35 Schaden erleiden bzw. eine Ungenauigkeit in der Positionierung auftritt.

Um während der Verstell- bzw. der Verfahrbewegungen der einzelnen Teileträger 2 entlang der Führungsbahnen 4, 6 bzw. in den einzelnen Arbeitsstationen 7 diese eindeutig identifizieren zu können, sind den Teileträgern 2 bevorzugt an ihren der Trageinheit 5 zugewendeten Unterseite Mittel zur Identifizierung zugeordnet. Diese können in den zwischen den Führungsrollen 28 verlaufenden Randbereichen des Teileträgers 2 bzw. dessen Grundkörper angeordnet sein. Diese Mittel können beispielsweise durch Kennwertgeber, RFID-Transponder, RFID-Elemente bzw. Strichcodierungen, gebildet sein. Unter einem RFID-Element (Radio Frequency Identification Element) werden kontaktlos wirkende, chipgestützte Elemente, insbesondere so genannte Transponderelemente, verstanden. Diese Identifikationsmittel können beispielsweise in jeder Arbeitsstation 7 ausgelesen werden und beispielsweise nach einem erfolgten Arbeits- bzw. Bearbeitungsschritt, dieser als zusätzliche Information an das Identifizierungsmittel übergeben und dort gespeichert werden. Dadurch ist es beispielsweise möglich, während der gesamten Verstellbewegungen des Teileträgers 2 in der Transportanlage 1 über jeden dieser Teileträger 2 eine eindeutige Information abrufen zu können. Damit kann die Wirtschaftlichkeit und Sicherheit der gesamten Transportanlage wesentlich erhöht und verbessert werden.

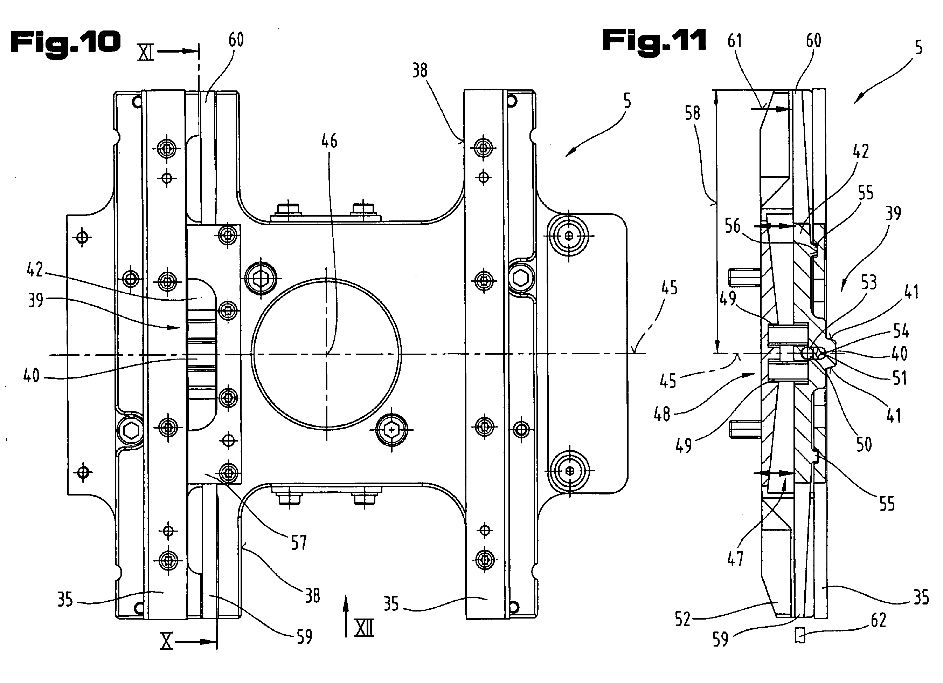

Wie nun besser aus den Fig. 10 bis 12 zu ersehen ist, weist die Trageinheit 5 zumindest in jenem Bereich, welcher dem ersten Förderabschnitt 11 der Vorschubvorrichtung 9 zugewendeten ist, eine Durchsetzung 38 auf. Dadurch ist es möglich, dass der erste Förderabschnitt 11 während seiner Eingriffstellung in das von der Trageinheit 5 definierte Lichtraumprofil hineinragen kann. Durch dieses Hineinragen ist auch ein eindeutiges Übergeben und/oder Übernehmen des an der Trageinheit 5 gehaltenen Teileträgers 2 und damit verbunden ein Eingriff mit den am Teileträger 2 angeordneten Eingriffselementen 10 möglich.

Wie nun aus einer Zusammenschau der Fig. 8 bis 12 zu ersehen ist, und dies auch zuvor kurz beschrieben worden ist, wird der Teileträger 2 mit seinen Führungsorganen 28 entlang der weiteren Führungselemente 35, welche an der Trageinheit 5 angeordnet sind, geführt gehaltert. Dabei ist die Ausrichtung der weiteren Führungselemente 35 an der Trageinheit 5 in senkrechter Richtung zur Vorschubrichtung der ersten Führungsbahn 4 des Transportsystems 3 gewählt. Um den Teileträger 2 entlang dieser weiteren Führungselemente 35 in Querrichtung zur Vorschubrichtung der ersten Führungsbahn 4 relativ gegenüber der Trageinheit 5 positionieren zu können, ist zwischen der Trageinheit 5 und dem Teileträger 2 zumindest eine Positionier- und Verriegelungsvorrichtung 39 vorgesehen. Dabei umfasst die Positionier- und Verriegelungsvorrichtung 39 bei der Trageinheit 5 zumindest ein Positionierelement 40, welches an gegenüberliegenden Seiten und in Richtung auf den Teileträger 2 hin verjüngende Keilflächen 41 aufweist. Zur Erzielung einer Positionierung des Teileträgers 2 entlang der weiteren Führungselemente 35 sind die Keilflächen 41 jeweils in senkrechter Richtung bezüglich der Längserstreckung der weiteren Führungselemente 35 ausgerichtet.

Die Positionier- und Verriegelungsvorrichtung 39 umfasst bei der Trageinheit 5 weiters ein dem Positionierelement 40 zugeordnetes Stellelement 42. Dieses ist hier stabförmig ausgebildet sowie parallel zur Längserstreckung der weiteren Führungselemente 35 ausgerichtet. Bevorzugt ist das Positionierelement 40 am Stellelement 42 auf der dem Teileträger 2 zugewendeten Seite angeordnet, wobei in der Positionier- und Verriegelungsstellung das Positionierelement 40 mit einer dazu gegengleich im Teileträger 2 ausgebildeten Positionierausnehmung 43 zusammenwirkt. Diese Positionierausnehmung 43 weist ihrerseits wiederum Keilflächen 44 auf, welche in der Positionier- und Verriegelungsstellung mit dem am Positionierelement 40 angeordneten Keilflächen 41 zusammenwirken. Dadurch wird eine exakte Positionierung des Teileträgers 2 relativ gegenüber der Trageinheit 5 zusätzlich zur Höhen- und Längsführung der zusammenwirkenden Führungsorgane 28 mit den Führungselementen 35 erzielt.

Die Positionier- und Verriegelungsvorrichtung 39 ist bei der Trageinheit 5 symmetrisch bezüglich einer Symmetrieebene 45 ausgebildet. Diese Symmetrieebene 45 verläuft durch ein Zentrum 46 der Trageinheit 5 und ist in senkrechter Richtung bezüglich der Längserstreckung der weiteren Führungselemente 35 sowie in senkrechter Richtung bezüglich der Transportebene 30 ausgerichtet.

Das zuvor beschriebene Stellelement 42 der Positionier- und Verriegelungsvorrichtung 39 ist in einem innerhalb der Trageinheit 5 angeordneten bzw. ausgebildeten Aufnahmeraum 47 angeordnet. In der Positionier- und Verriegelungsstellung ragt das Positionierelement 40 in Richtung auf den Teileträger 2 vor und wirkt mit der in dieser angeordneten Positionierausnehmung 43 zusammen. In dieser Positionier- und Verriegelungsstellung wird das Positionierelement 40 sowie das damit verbundene Stellelement 42 durch zumindest ein - hier im vorliegenden Ausführungsbeispiel dem Stellelement 42 zugeordnetes - Druckelement 48 in Richtung auf den Teileträger 2 hin verstellt bzw. gedrückt. Soll nun das Positionierelement 40 der Positionier- und Verriegelungsvorrichtung 39 bei der Trageinheit 5 von der Positionier- und Verriegelungsstellung in die Freigabestellung verlagert werden, erfolgt dies durch eine Verstellkraft, welche entgegen der durch das Druckelement 48 aufgebauten Druckkraft wirkt.

Das der Positionier- und Verriegelungsvorrichtung 39 bei der Trageinheit 5 zugeordnete Druckelement 48 ist jeweils durch symmetrisch bezüglich der Symmetrieebene 45 im Bereich des Positionierelements 40, jedoch auf der von diesem abgewendeten Seite, durch eine Druckfeder 49 gebildet. Weiters umfasst die Positionier- und Verriegelungsvorrichtung 39 bei der Trageinheit 5 miteinander zusammenwirkende Führungsteile 50, 51. Durch diese Führungsteile 50, 51 wird das Stellelement 42 sowie das mit diesem verbundene Positionierelement 40 relativ gegenüber einem Grundträger 52 der Trageinheit 5 relativ dazu festgelegt. Dabei ist ein erster Führungsteil 50 bei der Trageinheit 5 durch einen, in der Symmetrieebene 45 sowie parallel zur Transportebene 30 ausgerichteten Bolzen 53 gebildet. Der zweite Führungsteil 51 ist durch ein das Stellelement 42 durchsetzendes Langloch 54 gebildet. Das Langloch 54 ist in paralleler Richtung zum ersten Führungsteil 50, nämlich dem Bolzen 53 ausgerichtet, und auch von diesem durchsetzt. Durch die Anordnung des Langloches 54 im Stellelement 42 kann das gesamte Stellelement 42 mitsamt dem daran angeordneten Positionierelement 40 in vertikaler Richtung bezüglich der Transportebene 30 geführt verlagert werden. Durch die Beaufschlagung des Druckelementes 48, insbesondere der Druckfedern 49, wird das Stellelement 42 mit dem daran angeordneten Positionierelement 40 in die Positionier- und Verriegelungsstellung verstellt und in dieser Lage gehalten. Die Größe des Langloches in senkrechter Richtung zur Transportebene 30 entspricht dem notwendigen durchzuführenden Verstellweg zwischen der Positionier- und Verriegelungsstellung sowie der Freigabestellung des Positionierelements 40.

Die Positionier- und Verriegelungsvorrichtung 39 umfasst bei der Trageinheit 5 weiters am Stellelement 42 angeordnete, sowie dieses auf den Teileträger 2 hin überragende und bezüglich der Symmetrieebene 45 von dieser distanziert angeordnete Stützelemente 55, welche am Grundträger 52 der Trageinheit 5 abgestützt sind. Dabei können die Stützelemente 55 jeweils in eine diesen zugeordnete Ausnehmung 56 in der Trageinheit 5 eingreifen. Die Ausnehmungen 56 können aber auch in einem oder mehreren plattenförmigen Bauteilen 57 angeordnet sein, welcher oder welche ihrerseits an der Trageinheit 5 gehaltert sind. Die voneinander distanzierten Stützelemente 55 dienen einerseits dazu, das Stellelement 42 in seiner Positionier- und Verriegelungsstellung relativ gegenüber der Trageinheit 5 festzulegen und andererseits als Dreh- bzw. Schwenkpunkt für die Verstellung des Positionierelements 40 in die Freigabestellung. Dazu sind bevorzugt die Stützelemente 55 jeweils in etwa in einer halben Distanz 58 zwischen der Symmetrieebene 45 und voneinander distanzierten Enden 59, 60 des Stellelements 42 angeordnet. Das Stellelement 42 weist in etwa die gleiche Längserstreckung wie der Grundträger 52 der Trageinheit 5 bzw. die weiteren Führungselemente 35 auf.

Zur Erzielung einer relativen Verstellmöglichkeit des Stellelements 42 gegenüber dem Grundträger 52 der Trageinheit 5, ist das Stellelement 42 an seiner dem Teileträger 2 zuwendbaren Seite, ausgehend von zumindest einem der Stützelemente 55, keilförmig verjüngend in Richtung auf das Ende 59, 60 hin ausgebildet. Auch der Aufnahmeraum 47 in der Trageinheit 5, ist auf seiner vom Teileträger 2 abgewendeten Seite jeweils ausgehend von der Symmetrieebene 45 sich keilförmig erweiternd ausgebildet.

Durch den hier gezeigten, symmetrischen Aufbau des Stellelements 42 sowie des Grundträgers 52 bezüglich der Symmetrieebene 45, ist eine beidseitige Betätigung des Stellelements 42 zur Verstellung des Positionierelements 40 zwischen der Positionier- und Verriegelungsstellung sowie dessen Freigabestellung möglich. Dazu ist dem Stellelement 42 der Positionier- und Verriegelungsvorrichtung 39 an zumindest einem Ende 59, 60, jedoch vorzugsweise an jenem Ende, welches von der Übergabeeinrichtung 8 abgewendet ist, eine Betätigungsvorrichtung 61 zugeordnet. Diese Betätigungsvorrichtung 61 ist durch einen in der Fig. 11 dargestellten Pfeil symbolisch angedeutet. Diese Betätigungsvorrichtung 61 kann durch eine Zylinder-Kolbenanordnung, einen Schrittmotor, einen Spindeltrieb oder ähnliche standardisierte Bauteile gebildet sein.

Zur Lageüberwachung der Positionier- und Verriegelungsvorrichtung 39 ist es vorteilhaft, wenn dem Stellelement 42 der Positionier- und Verriegelungsvorrichtung 39 an zumindest einem Ende 60, 59, vorzugsweise jedoch an jenem Ende, welches der Übergabeeinrichtung 8 zugewendet ist, einer Überwachungsvorrichtung 62 zugeordnet ist. Diese Überwachungsvorrichtung 62 kann beispielsweise durch einen Sensor oder ähnliches gebildet sein, welcher mit einer hier nicht dargestellten zentralen Steuerung der Transportanlage 1 verbunden ist.

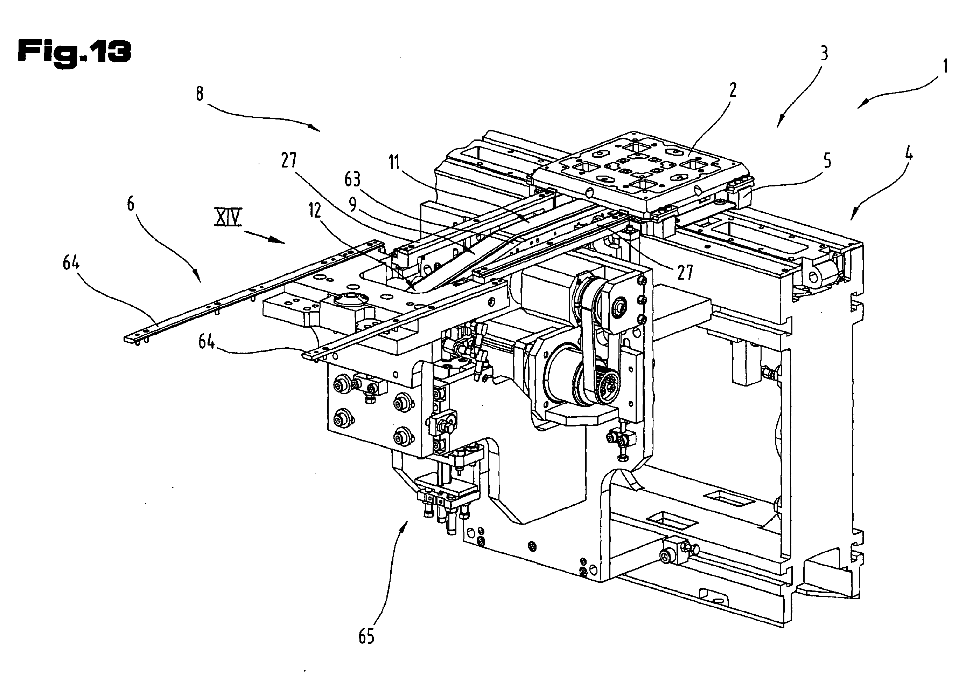

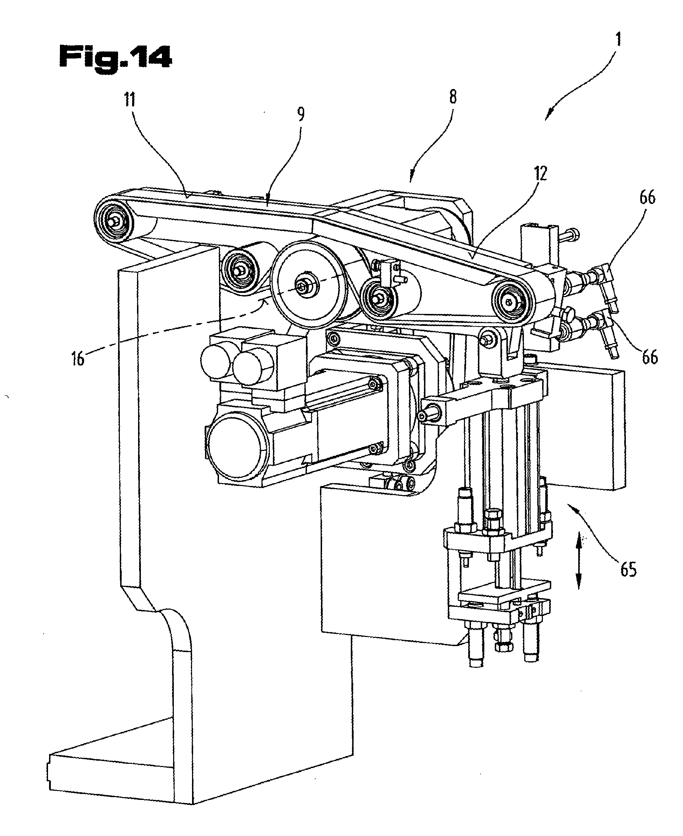

In den Fig. 13 und 14 ist eine weitere und gegebenenfalls für sich eigenständige Ausführungsform der Übergabeeinrichtung 1 im Bereich zwischen den beiden Führungsbahnen 4, 6 gezeigt, wobei wiederum für gleiche Teile gleiche Bezugszeichen bzw. Bauteilbezeichnungen, wie in den vorangegangenen Fig. 1 bis 12 verwendet werden. Um unnötige Wiederholungen zu vermeiden, wird auf die detaillierte Beschreibung in den vorangegangenen Fig. 1 bis 12 hingewiesen bzw. Bezug genommen.

Bei dieser hier gewählten Darstellung befindet sich die Trageinheit 5 mitsamt dem daran angeordneten Teileträger 2 in der Übergabe- bzw. Übernahmeposition, ausgehend vom bzw. zur Führungsbahn 4. Im Bereich der Übergabeeinrichtung 8 sind die beiden Führungselemente 27 zu ersehen, zwischen welchen die Vorschubvorrichtung 9 mit ihren Förderabschnitten 11, 12 angeordnet ist. In der hier gezeigten Stellung befindet sich der Förderabschnitt 11 in der Eingriffstellung mit dem zu verfahrenden Teileträger 2.

Im Bereich der Führungsbahn 6 sind dort angeordnete weitere Führungselemente 64 vereinfacht schematisch dargestellt. Die Führungselemente 64 stehen mit den Führungsorganen 28 des Teileträgers 2 jeweils an den voneinander abgewandten Seiten derselben in Eingriff. Diese sind somit außerhalb und seitlich bezüglich des Teileträgers 2 und dessen Führungsorganen 28 angeordnet. Es wäre aber auch möglich, die Führungselemente 64 im Bereich der Führungsbahn 6 fluchtend bezüglich der Führungselemente 27 der Übergabeeinrichtung 8 anzuordnen. Im Gegensatz zu dem zuvor in den Fig. 1 bis 12 beschriebenen Schwenkantrieb für den Tragteil 63 und die durch diesen ausgebildeten Förderabschnitt 11, 12 erfolgt hier die Verstellung durch eine in einem Endbereich eines Förderabschnittes 11, 12 angeordnete Stellvorrichtung 65. Diese Stellvorrichtung 65 kann beispielsweise durch eine Zylinder-Kolbenanordnung, einen Linearantrieb, einen Spindelantrieb oder ähnliche Verstellmechanismen gebildet sein. Dadurch erfolgt die Einbringung der Verstellkraft exzentrisch bezüglich der Schwenkachse 16 des Tragteils 63. Aus Platzgründen erfolgt die Anordnung der Stellvorrichtung 65 an der der Führungsbahn 6 zugewendeten Seite der Übergabeeinrichtung 8.

Dem oder den Förderabschnitten 11, 12 können wiederum Mittel zur Begrenzung der Schwenkbewegung bei Erreichen einer seiner Endstellung zugeordnet sein, durch welche die beiden Endlagen definiert sind. Dies ist vereinfacht durch Anschläge dargestellt, welche zusätzlich noch bei Erreichen der Endlagen entsprechend wirkende Stoßdämpfer aufweisen können. Durch nicht näher dargestellte Einstell- bzw. Justiermittel kann der exakte Verstellweg der Stellvorrichtung 65 festgelegt und damit in weiterer Folge die Schwenkbewegung der Förderabschnitte 11, 12 sowie des diesen zugeordneten Tragteils 63 festgelegt werden. Zur Überwachung der jeweiligen Endlagen kann im Bereich der Stellvorrichtung 65 jeweils ein Sensor 66 angeordnet sein, welcher vereinfacht dargestellt ist. Auf die Darstellung der Verbindung mit entsprechenden Steuer- bzw. Regelvorrichtungen wurde der besseren Übersichtlichkeit halber verzichtet.

Der Antrieb der Stellvorrichtung 65 kann durch die unterschiedlichsten Antriebsmittel, wie beispielsweise Druckluft, Hydraulik, elektrische Energie, auf mechanischem Wege oder durch entsprechend wirkende Magnetfelder erfolgen und ist frei aus dem bekannten Stand der Technik wählbar.

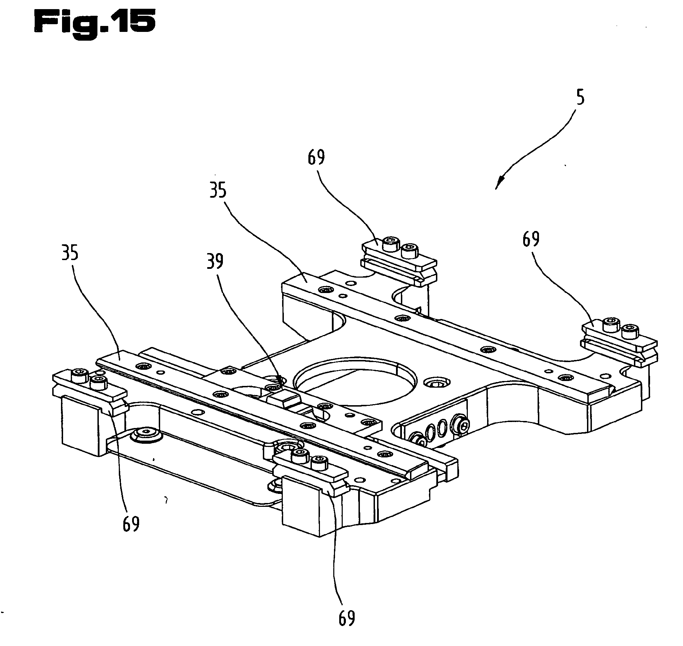

In den Fig. 15 bis 17 ist eine weitere mögliche und gegebenenfalls für sich eigenständige Ausführungsform der Trageinheit 5 mit dem darauf angeordneten Teileträger 2 gezeigt, wobei wiederum für gleiche Teile gleiche Bezugszeichen bzw. Bauteilbezeichnungen, wie in den vorangegangenen Fig. 1 bis 14 verwendet werden. Um unnötige Wiederholungen zu vermeiden, wird auf die detaillierte Beschreibung in den vorangegangenen Fig. 1 bis 14 hingewiesen bzw. Bezug genommen.

Wie bereits zuvor beschrieben, weist der Teileträger 2 an seiner der Trageinheit 5 zugewendeten Unterseite die bevorzugt L-förmig ausgebildeten Stützteile 36 auf. Die einzelnen Stützteile 36 weisen Schenkelenden 67 auf, welche ihrerseits wiederum Stirnseiten 68 des Teileträgers 2 nach außen überragen.

Wird der Teileträger 2 nur in einer einzigen Fahrtrichtung bzw. Transportrichtung verwendet, ist es ausreichend, wenn die Schenkelenden 67 nur an jeweils gegenüber liegenden Stirnseiten 68 des Teilträgers 2 angeordnet sind und diese überragen. Soll hingegen ein universeller Einsatz des Teileträgers 2 ermöglicht werden, ist es vorteilhaft, wenn an jeder der Stirnseiten 68 und zur stabileren Abstützung im Bereich der jeweiligen Ecken der Teileträger 2 die Schenkelenden 67 des Stützteils 36 vorragen. Dazu ist der Stützteil 36 bevorzugt in etwa L-förmig ausgebildet und seinerseits aus einem einzigen Stück gefertigt. Dadurch wird ein einfacher symmetrischer Aufbau und eine damit verbundenen einheitliche Anordnung am Teileträger 2 erzielt.

Wie ebenfalls zuvor beschrieben, soll der Teileträger 2 bei einer sich an der Trageinheit 5 befindlichen Position und bei in Eingriff stehenden Führungsorganen 28 mit den weiteren Führungselementen 35 der Trageinheit 5 relativ gegenüber der Trageinheit 5 minimal in senkrechter Richtung bezüglich der Transportebene 30 angehoben und in senkrechter Richtung bezüglich der Transportebene 30 an der Trageinheit 5 abgestützt sein. Die Größenordnung des Anhebens liegt dabei bei ausgehend vom hundertstel mm-Bereich bis hin in den zehntel mm-Bereich, wie z.B. 0,01 mm bis 0,5 mm.

Im Gegensatz zu der zuvor beschriebenen Abstützmöglichkeit sind hier den einzelnen und über den Teileträger 2 vorragenden Stützteilen 36, insbesondere deren Schenkelenden 67, an der Trageinheit 5 eigene Stützauflagen 69 zugeordnet. Diese Stützauflagen 69 an der Trageinheit 5 dienen zur Abstützung und minimalen Anhebung des Teileträgers 2 relativ gegenüber der Trageinheit 5, wodurch keine direkte Kraftübertragung im Bereich der zusammenwirkenden Führungen erfolgt und dadurch eine Entlastung bzw. Freistellung der sich in Eingriff befindlichen Führungsorgane 28 mit den weiteren Führungselementen 35 bewirkt wird.

Dieses Anheben und die zuvor bereits beschriebene gleichzeitige Positionierung des Teileträgers 2 gegenüber der Trageinheit 5 entlastet nicht nur die in Eingriff stehenden Führungsorgane 28 mit den Führungselementen 35, sondern führt auch zu einer exakten höhenmäßigen Ausrichtung des Teileträgers 2 relativ gegenüber der Trageinheit 5. Darüber hinaus kann bei entsprechender Ausbildung der Stützauflage 69 auch ein Abheben des Teileträgers 2 auf die von der Trageinheit 5 abgewendete Seite verhindert werden, wodurch eine mögliche Beschädigung der zusammenwirkenden Führungsorganen 28 mit den Führungselementen 35 ebenfalls vermieden wird. Gleichfalls kann dabei auch eine Geräuschdämmung während der Fortbewegung der Trageinheit 5 gemeinsam mit dem Teileträger 2 durch das Zusammenwirken der Schenkelenden 67 der Stützteile 36 mit den Stützauflagen 69 erzielt werden.

Die einzelnen Stützauflagen 69 sind bei dieser Ausbildung jeweils in den Eckbereichen der Trageinheit 5 angeordnet und können zusätzlich durch entsprechende Werkstoffwahl verschleißfest ausgebildet sein. Dadurch wird über eine lange Betriebsdauer eine hohe Positioniergenauigkeit des Teilträgers 2 an der Trageinheit 5erzielt. Durch die diagonale bzw. in den Eckbereichen gewählten Anordnung der Stützauflage 69 erfolgt während der Einschubbewegung bzw. Ausschubbewegung des Teileträges 2 zur bzw. von der Trageinheit 5 nur ein kurzer gegenseitiger Eingriff.

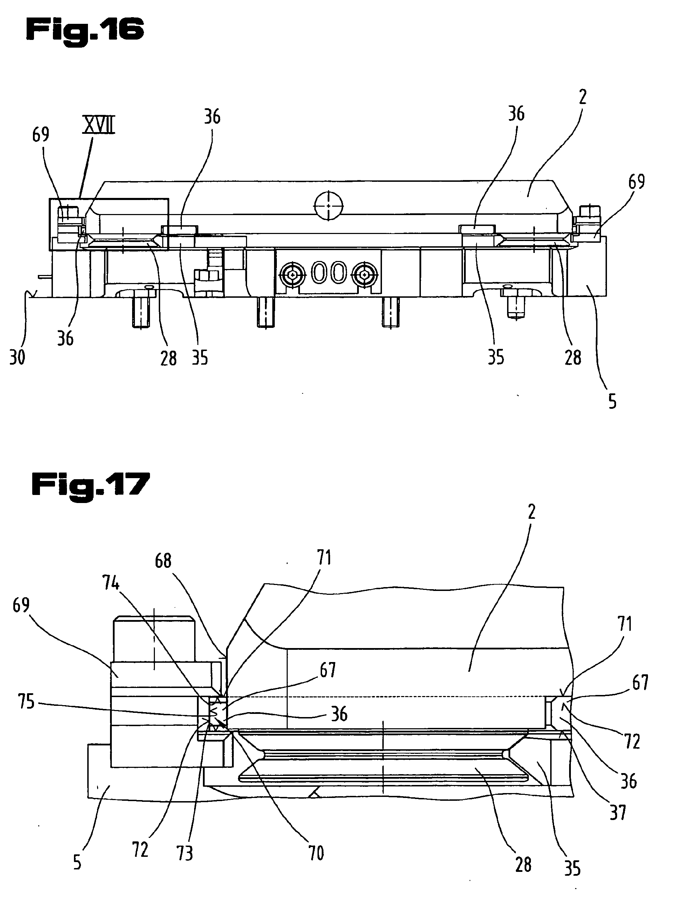

Wie nun besser aus Fig. 17 ersehen ist, weist die Stützauflage 69 in Einschubrichtung gesehen eine C-förmig ausgebildete und zum Schenkelende 67 des Stützteils 36 hin geöffnete, nutförmige Ausnehmung 70 auf und dient zur Aufnahme des Schenkelendes 67 des Stützteils 36 auf. Eine Längserstreckung der C-förmig ausgebildeten, nutförmigen Ausnehmung 70 ist dabei gleich zur Längserstreckung der Führungselemente 35 an der Trageinheit 5 gewählt.

Zur exakten gegenseitigen Positionierung des Teileträgers 2 relativ gegenüber der Trageinheit 5 können durch entsprechende Wahl der Toleranzen der Ausnehmung 70 der Stützauflage 69 bezüglich der Abmessungen des Schenkelendes 67 des Stützteils 36 unterschiedliche Stütz- bzw. Halteeigenschaften erzielt werden. So ist ausgehend von einer reinen vertikalen Abstützung des Teileträgers 2 an der Trageinheit 5, bis hin zu einer exakten Positionierung und Herabsetzung der gegenseitigen Freiheitsgrade jede Einschränkung möglich. Der Stützteil 36 weist, wie bereits zuvor beschrieben, an der der Trageinheit 5 zugewendeten Seite die Stützfläche 37 auf. Aufgrund des zuvor beschriebenen Überstandes des Schenkelendes 67 über die Stirnseite 68 des Teileträgers 2 bildet sich an der von der ersten Stützfläche 37 abgewendeten Seite des Stützteils 36 eine weitere Stützfläche 71 aus. Darüber hinaus ist es auch noch möglich, an dem vom Teileträger 2 abgewendeten Stirnende des Schenkelendes 67 eine weitere Stützfläche 72 am Stützteil 36 auszubilden.

Bei entsprechender Wahl von zusammenwirkenden Einlaufschrägen am Stützteil 36 bzw. dessen Schenkelende 67 und der nutförmigen Ausnehmung 70 in der Stützauflage 69 kann ein positionsgenaues, ungehindertes Zusammenfahren und in Eingriff bringen zwischen dem Teileträger 2 und der Trageinheit 5 mit den jeweils zusammenwirkenden Stützteilen 36 und Stützautlagen 69 erfolgen.

Die C-förmig ausgebildete Ausnehmung 70 kann ihrerseits wiederum den Stützflächen 37, 71 sowie 72 jeweils zugeordnete bzw. mit diesen zusammenwirkende Widerlagerflächen 73 bis 75 aufweisen. So ist bei diesem hier gezeigten Ausführungsbeispiel die Widerlagerfläche 73 der Stützfläche 37, die Widerlagerfläche 74 der Stützfläche 71 und schließlich die Widerlagerfläche 75 der Stützfläche 72 zugewandt bzw. zugeordnet.

Soll nur eine reine Abstützung erfolgen, so wirken lediglich die der Trageinheit 5 zugewandte Stützfläche 37 mit der Widerlagerfläche 73 zusammen. Soll eine weitere vertikale Positionierung des Teileträgers 2 gegenüber der Trageinheit 5 erzielt werden, kann ein weiterer Freiheitsgrad durch entsprechendes Zusammenwirken der von der Trageinheit 5 abgewendeten Stützfläche 71 mit der weiteren Widerlagerfläche 74 reduziert werden. Schließlich kann eine quer zur Bewegungsrichtung des Teileträgers 2 bezüglich der Trageinheit 5 gewünschte Positionierung bzw. Ausrichtung durch Zusammenwirken der senkrecht zur Transportebene 30 ausgerichteten Stützfläche 72 und Widerlagerfläche 75 erzielt werden. Dies erfordert eine exakte gegenseitige Ausrichtung und Anordnung der Stützteile 36 zu den Stützauflagen 69 zueinander. Durch entsprechende Mehrfachanordnung im Bereich der Stirnseiten 68 des Teileträgers 2 bzw. der diesem zugeordneten Trageinheit 5 ist eine exakte gegenseitige Ausrichtung und Positionierung möglich.

Die Ausführungsbeispiele zeigen mögliche Ausführungsvarianten der Transportanlage 1, insbesondere der Übergabeeinrichtung 8, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Transportanlage 1, insbesondere der Übergabeeinrichtung 8, diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2, 3, 4, 5; 6; 7, 8, 9; 10, 11, 12; 13, 14; 15, 16, 17 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transportanlage
- 2: Teileträger
- 3: Transportsystem
- 4: Führungsbahn
- 5: Trageinheit

- 6: Führungsbahn
- 7: Arbeitsstation
- 8: Übergabeeinrichtung
- 9: Vorschubvorrichtung
- 10: Eingriffselement

- 11: Förderabschnitt
- 12: Förderabschnitt
- 13: Förderebene
- 14: Förderebene
- 15: Winkel

- 16: Schwenkachse
- 17: Antriebsorgan
- 18: Drehachse
- 19: Grundgehäuse
- 20: Traggehäuse

- 21: Antriebswelle
- 22: Ende
- 23: Ende
- 24: Antriebsorgan
- 25: Stellantrieb

- 26: Motor
- 27: Führungselement
- 28: Führungsorgan
- 29: Vertiefung
- 30: Transportebene

- 31: Achse
- 32: Führungsrolle
- 33: Unterseite
- 34: Durchsetzung
- 35: Führungselement

- 36: Stützteil
- 37: Stützfläche
- 38: Durchsetzung
- 39: Positionier- und Verriegelungsvorrichtung
- 40: Positionierelement

- 41: Keilfläche
- 42: Stellelement
- 43: Positionierausnehmung
- 44: Keilfläche
- 45: Symmetrieebene

- 46: Zentrum
- 47: Aufnahmeraum
- 48: Druckelement
- 49: Druckfeder
- 50: Führungsteil

- 51: Führungsteil
- 52: Grundträger
- 53: Bolzen
- 54: Langloch
- 55: Stützelement

- 56: Ausnehmung
- 57: Bauteil
- 58: Distanz
- 59: Ende
- 60: Ende

- 61: Betätigungsvorrichtung
- 62: Überwachungsvorrichtung
- 63: Tragteil
- 64: Führungselement
- 65: Stellvorrichtung

- 66: Sensor
- 67: Schenkelende
- 68: Stirnseite
- 69: Stützauflage
- 70: Ausnehmung

- 71: Stützfläche
- 72: Stützfläche
- 73: Widerlagerfläche
- 74: Widerlagerfläche
- 75: Widerlagerfläche

## Patentansprüche

1. Transportanlage (1) für Teileträger (2) mit zumindest einem Transportsystem (3), das eine erste Führungsbahn (4) ausbildet und das Transportsystem (3) entlang seiner ersten Führungsbahn (4) zumindest eine verfahrbare Trageinheit (5) für den Teileträger (2) umfasst und die Trageinheit (5) während ihrer Vorschubbewegung entlang der ersten Führungsbahn (4) ein Lichtraumprofil definiert, mit einer weiteren Führungsbahn (6), welche von der ersten Führungsbahn (4) distanziert sowie gegebenenfalls quer zu dieser ausgerichtet ist, mit einer Übergabeeinrichtung (8) zum Umsetzen des Teileträgers (2) zwischen den beiden Führungsbahnen (4, 6), wobei die Übergabeeinrichtung (8) eine Vorschubvorrichtung (9) für den Teileträger (2) umfasst und die Vorschubvorrichtung (9) mit am Teileträger (2) angeordneten Eingriffselementen (10) in Eingriff bringbar ist, **dadurch gekennzeichnet, dass** die Vorschubvorrichtung (9) der Übergabeeinrichtung (8) einen ersten und einen zweiten Förderabschnitt (11, 12) aufweist, wobei der erste Förderabschnitt (11) der ersten Führungsbahn des Transportsystems (3) zugewendet ist, und der erste Förderabschnitt (11) von einer Eingriffsstellung mit den am Teileträger (2) angeordneten Eingriffselementen (10) in eine außer Eingriff befindliche Ruhestellung verbringbar ist, wobei der erste Förderabschnitt (11) in der Eingriffsstellung zumindest bereichsweise in das Lichtraumprofil der Trageinheit (5) für den Teileträger (2) hineinragt und in der Ruhestellung der erste Förderabschnitt (11) in einer Position außerhalb des Lichtraumprofils der Trageinheit (5) angeordnet ist.

2. Transportanlage (1) nach Anspruch 1, **dadurch gekennzeichnet, dass** der erste Förderabschnitt (11) in seiner Ruhestellung im Bereich des Lichtraumprofils unterhalb desselben angeordnet ist.

3. Transportanlage (1) nach Anspruch 1 oder 2, **dadurch gekennzeichnet, dass** der Förderabschnitt (11, 12) der Vorschubvorrichtung (9) durch ein Transportorgan, wie ein endlos umlaufendes Zugmittel oder eine Rollenbahn gebildet ist.

4. Transportanlage (1) nach einem der vorhergehenden Ansprüche, **dadurch gekennzeichnet, dass** die beiden Förderabschnitte (11, 12) unmittelbar hintereinander angeordnet sind.

5. Transportanlage (1) nach einem der vorhergehenden Ansprüche, **dadurch gekennzeichnet, dass** die beiden Förderabschnitte (11, 12) jeweils Förderebenen (13, 14) ausbilden und diese einen stumpfen Winkel (15) einschließen.

6. Transportanlage (1) nach einem der vorhergehenden Ansprüche, **dadurch gekennzeichnet, dass** die beiden Förderabschnitte (11, 12) durch ein gemeinsames, durchlaufend ausgebildetes Transportorgan gebildet sind.

7. Transportanlage (1) nach einem der vorhergehenden Ansprüche, **dadurch gekennzeichnet, dass** bei sich in der Ruhestellung befindlichem ersten Förderabschnitt (11) sich der zweite Förderabschnitt (12) in seiner Eingriffsstellung befindet.

8. Transportanlage (1) nach einem der vorhergehenden Ansprüche, **dadurch gekennzeichnet, dass** bei sich in der Ruhestellung befindlichem zweiten Förderabschnitt (12) sich der erste Förderabschnitt (11) in seiner Eingriffsstellung befindet.

9. Transportanlage (1) nach einem der vorhergehenden Ansprüche, **dadurch gekennzeichnet, dass** den beiden Förderabschnitten (11, 12) ein gemeinsamer Tragteil (63) zugeordnet ist und der Tragteil (63) mit den beiden Förderabschnitten (11, 12) um eine gemeinsame Schwenkachse (16) jeweils zwischen den beiden Stellungen (Eingriffsstellung und Ruhestellung) verlagerbar ist.

10. Transportanlage (1) nach Anspruch 9, **dadurch gekennzeichnet, dass** die Schwenkachse (16) in senkrechter Richtung zur Vorschubrichtung der Förderabschnitte (11, 12) sowie in paralleler Richtung zur Förderebene (13, 14) im Bereich der Förderabschnitte (11, 12) ausgerichtet ist.

11. Transportanlage (1) nach Anspruch 9 oder Anspruch 10, **dadurch gekennzeichnet, dass** dem Transportorgan der Vorschubvorrichtung (9) zumindest ein Antriebsorgan (17) zugeordnet ist und eine Drehachse (18) des Antriebsorgans (17) und die Schwenkachse (16) der Förderabschnitte (11, 12) in einer gemeinsamen Achse angeordnet sind.

12. Transportanlage (1) nach einem der vorhergehenden Ansprüche, **dadurch gekennzeichnet, dass** ein Grundgehäuse (19) der Vorschubvorrichtung (9) ein Traggehäuse (20) der Förderabschnitte (11, 12) lagert und innerhalb des Traggehäuses (20) eine Antriebswelle (21) für das Antriebsorgan (17) gelagert ist.

13. Transportanlage (1) nach Anspruch 12, **dadurch gekennzeichnet, dass** die Antriebswelle (21) das Traggehäuse (20) durchsetzt und an einem ersten Ende (22) das Antriebsorgan (17) für das Transportorgan angeordnet ist.

14. Transportanlage (1) nach Anspruch 12 oder 13, **dadurch gekennzeichnet, dass** an der Antriebswelle (21) am weiteren Ende (23) ein weiteres Antriebsorgan (24) angeordnet ist und über dieses der Antrieb der Antriebswelle (21) erfolgt.

15. Transportanlage (1) nach einem der Ansprüche 12 bis 14, **dadurch gekennzeichnet, dass** dem Traggehäuse (20) oder dem Tragteil (63) ein Stellantrieb (25) zugeordnet ist, mit welchem die Förderabschnitte (11, 12) zwischen ihren beiden Stellungen (Eingriffsstellung und Ruhestellung) verstellbar sind.

16. Transportanlage (1) nach einem der Ansprüche 12 bis 15, **dadurch gekennzeichnet, dass** dem Förderabschnitt (11, 12) Mittel zur Begrenzung seiner Schwenkbewegung bei Erreichen einer Stellung (Eingriffsstellung, Ruhestellung) zugeordnet sind, durch welche jeweils Endlagen definiert sind.

17. Transportanlage (1) nach Anspruch 16, **dadurch gekennzeichnet, dass** den Mitteln zur Begrenzung der Schwenkbewegung beim Erreichen ihrer Endlagen jeweils ein Stoßdämpfer zugeordnet ist.

18. Transportanlage (1) nach Anspruch 16 oder 17, **dadurch gekennzeichnet, dass** den Mitteln zur Begrenzung der Schwenkbewegung beim Erreichen zumindest einer der Endlagen ein Sensor (66) zugeordnet ist.

19. Transportanlage (1) nach einem der vorhergehenden Ansprüche, **dadurch gekennzeichnet, dass** der Übergabeeinrichtung (8) im Bereich der Förderabschnitte (11, 12) Führungselemente (27) für den Teileträger (2) zugeordnet sind.

20. Transportanlage (1) nach Anspruch 19, **dadurch gekennzeichnet, dass** die Führungselemente (27) durch Führungsleisten gebildet sind, welche an in Förderrichtung gesehen voneinander abgewendeten Seiten jeweils einen V-förmig ausgebildeten und in entgegen gesetzter Richtung zusammenlaufenden Querschnitt aufweisen.

21. Transportanlage (1) nach einem der vorhergehenden Ansprüche, **dadurch gekennzeichnet, dass** der Teileträger (2) Führungsorgane (28) mit einer nutförmigen Vertiefung (29) zur Höhen- und/oder Seitenführung aufweist.

22. Transportanlage (1) nach Anspruch 21, **dadurch gekennzeichnet, dass** die Führungsorgane (28) durch um senkrecht zu einer Transportebene (30) ausgerichtete Achsen (31) rotierende Führungsrollen (32) gebildet sind.

23. Transportanlage (1) nach Anspruch 21 oder 22, **dadurch gekennzeichnet, dass** die nutförmige Vertiefung (29) der Führungsorgane (28) gegengleich zum V-förmig ausgebildeten Querschnitt der Führungsleisten ausgebildet ist.

24. Transportanlage (1) nach einem der Ansprüche 21 bis 23, **dadurch gekennzeichnet, dass** die Führungsorgane (28) am Teileträger (2) an einander gegenüberliegenden Seiten jeweils in Eckbereichen angeordnet sind.

25. Transportanlage (1) nach einem der Ansprüche 19 oder 20 und einem der Ansprüche 21 bis 24, **dadurch gekennzeichnet, dass** die Führungsorgane (28) zumindest im Bereich der Förderabschnitte (11, 12) mit den Führungselementen (27) zusammenwirken.

26. Transportanlage (1) nach einem der Ansprüche 22 bis 25, **dadurch gekennzeichnet, dass** der Teileträger (2) vorzugsweise quadratisch ausgebildet ist und die Führungsrollen (32) auf einer der Transportebene (30) zugewandten Unterseite (33) am Teileträger (2) angeordnet sind.

27. Transportanlage (1) nach einem der vorhergehenden Ansprüche, **dadurch gekennzeichnet, dass** der Teileträger (2) zumindest eine ihn in senkrechter Richtung bezüglich einer Transportebene (30) durchdringende Durchsetzung (34) aufweist.

28. Transportanlage (1) nach einem der Ansprüche 19 oder 20 und einem der Ansprüche 21 bis 27, **dadurch gekennzeichnet, dass** die Führungselemente (27) der Übergabeeinrichtung (8) zumindest im Bereich der Förderabschnitte (11, 12) mit den jeweils einander zugewendeten Seiten der Führungsorgane (28) des Teileträgers (2) in Eingriff stehen.

29. Transportanlage (1) nach einem der Ansprüche 21 bis 28, **dadurch gekennzeichnet, dass** an der Trageinheit (5) weitere Führungselemente (35) für die Führungsorgane (28) des Teileträgers (2) mit der nutförmigen Vertiefung (29) angeordnet sind, wobei diese in paralleler Richtung bezüglich der Ein- bzw. Ausschleusrichtung ausgerichtet sind.

30. Transportanlage (1) nach Anspruch 29, **dadurch gekennzeichnet, dass** die weiteren Führungselemente (35) der Trageinheit (5) mit den jeweils einander zugewendeten Seiten der Führungsorgane (28) des Teileträgers (2) in Eingriff stehen.

31. Transportanlage (1) nach Anspruch 29 oder 30, **dadurch gekennzeichnet, dass** die weiteren Führungselemente (35) der Trageinheit (5) das der Trageinheit (5) zugewendete Ende des ersten Förderabschnitts (11) in Richtung auf den zweiten Förderabschnitt (12) hin überragen.

32. Transportanlage (1) nach einem der Ansprüche 29 bis 31, **dadurch gekennzeichnet, dass** der Teileträger (2) bei einer sich an der Trageinheit (5) befindlichen Position und bei in Eingriff stehenden Führungsorganen (28) mit den weiteren Führungselementen (35) der Trageinheit (5) der Teileträger (2) relativ gegenüber der Trageinheit (5) minimal in senkrechter Richtung bezüglich der Transportebene (30) angehoben und in senkrechter Richtung bezüglich der Transportebene (30) an der Trageinheit (5) abgestützt ist.

33. Transportanlage (1) nach Anspruch 32, **dadurch gekennzeichnet, dass** der Teileträger (2) an seiner der Trageinheit (5) zugewendeten Seite bereichsweise angeordnete Stützteile (36) zur Abstützung an der Trageinheit (5) aufweist.

34. Transportanlage (1) nach Anspruch 33, **dadurch gekennzeichnet, dass** die Stützteile (36) im Bereich von Diagonalen des Teileträgers (2) angeordnet sind.

35. Transportanlage (1) nach einem der Ansprüche 33 oder 34, **dadurch gekennzeichnet, dass** die Stützteile (36) bevorzugt in etwa L-förmig ausgebildet sind und Schenkelenden (67) der Stützteile (36) Stirnseiten (68) des Teileträgers (2) überragen.

36. Transportanlage (1) nach Anspruch 35, **dadurch gekennzeichnet, dass** das Schenkelende (67) des Stützteils (36) mit einer Stützauflage (69) an der Trageinheit (5) zur Abstützung an dieser zusammenwirkt.

37. Transportanlage (1) nach Anspruch 36, **dadurch gekennzeichnet, dass** an der Trageinheit (5) in deren Eckbereichen jeweils eine Stützauflage (69) angeordnet ist.

38. Transportanlage (1) nach Anspruch 36 oder 37, **dadurch gekennzeichnet, dass** die Stützauflage (69) eine C-förmig ausgebildete und zum Schenkelende (67) hin geöffnete nutförmige Ausnehmung (70) zur Aufnahme des Schenkelendes (67) des Stützteils (36) aufweist.

39. Transportanlage (1) nach Anspruch 38, **dadurch gekennzeichnet, dass** eine Längserstreckung der C-förmig ausgebildeten nutförmigen Ausnehmung (70) gleich zur Längserstreckung der Führungselemente (35) an der Trageinheit (5) ausgerichtet ist.

40. Transportanlage (1) nach einem der Ansprüche 33 bis 35, **dadurch gekennzeichnet, dass** die Stützteile (36) an der der Trageinheit (5) zugewendeten Seite Stützflächen (37) ausbilden, welche an den diesen zugewendeten Führungselementen (35) zur Abstützung an der Trageinheit (5) anliegen.

41. Transportanlage (1) nach Anspruch 32, **dadurch gekennzeichnet, dass** der Teileträger (2) über Stirnflächen der Achsen (31) der Führungsrollen (32) an der Trageinheit (5) abgestützt ist.

42. Transportanlage (1) nach einem der vorhergehenden Ansprüche, **dadurch gekennzeichnet, dass** dem Teileträger (2) an seiner der Trageinheit (5) zugewendeten Seite zumindest ein Mittel zu seiner Identifizierung zugeordnet ist.

43. Transportanlage (1) nach einem der vorhergehenden Ansprüche, **dadurch gekennzeichnet, dass** die Trageinheit (5) zumindest in jenem Bereich, welcher dem ersten Förderabschnitt (11) zugewendet ist, eine Durchsetzung (38) aufweist.

44. Transportanlage (1) nach einem der vorhergehenden Ansprüche, **dadurch gekennzeichnet, dass** zwischen der Trageinheit (5) und dem Teileträger (2) zumindest eine Positionier- und Verriegelungsvorrichtung (39) vorgesehen ist.

45. Transportanlage (1) nach Anspruch 44, **dadurch gekennzeichnet, dass** die Positionier- und Verriegelungsvorrichtung (39) bei der Trageinheit (5) zumindest ein Positionierelement (40) umfasst, welches an gegenüberliegenden Seiten auf den Teileträger (2) hin verjüngende Keilflächen (41) aufweist.

46. Transportanlage (1) nach Anspruch 45, **dadurch gekennzeichnet, dass** die Keilflächen (41) jeweils in senkrechter Richtung bezüglich der Längserstreckung der weiteren Führungselemente (35) ausgerichtet sind.

47. Transportanlage (1) nach einem der Ansprüche 29 bis 41 und einem der Ansprüche 44 bis 46, **dadurch gekennzeichnet, dass** die Positionier- und Verriegelungsvorrichtung (39) bei der Trageinheit (5) weiters ein Stellelement (42) umfasst, welches stabförmig ausgebildet sowie parallel zur Längserstreckung der weiteren Führungselemente (35) ausgerichtet ist.

48. Transportanlage (1) nach einem der Ansprüche 45 bis 47, **dadurch gekennzeichnet, dass** das Positionierelement (40) am Stellelement (42) angeordnet ist und in der Positionier- und Verriegelungsstellung das Positionierelement (40) mit einer dazu gegengleich im Teileträger (2) ausgebildeten Positionierausnehmung (43) zusammenwirkt.

49. Transportanlage (1) nach einem der Ansprüche 29 bis 41 und einem der Ansprüche 44 bis 48, **dadurch gekennzeichnet, dass** die Positionier- und Verriegelungsvorrichtung (39) bei der Trageinheit (5) symmetrisch bezüglich einer Symmetrieebene (45) ausgebildet ist, wobei die Symmetrieebene (45) durch ein Zentrum (46) der Trageinheit (5) verläuft, in senkrechter Richtung bezüglich der Längserstreckung der weiteren Führungselemente (35) sowie in senkrechter Richtung bezüglich der Transportebene (30) ausgerichtet ist.

50. Transportanlage (1) nach einem der Ansprüche 47 bis 49, **dadurch gekennzeichnet, dass** das Stellelement (42) der Positionier- und Verriegelungsvorrichtung (39) bei der Trageinheit (5) in einem Aufnahmeraum (47) innerhalb derselben angeordnet ist.

51. Transportanlage (1) nach einem der Ansprüche 44 bis 50, **dadurch gekennzeichnet, dass** die Positionier- und Verriegelungsvorrichtung (39) bei der Trageinheit (5) von der Positionier- und Verriegelungsstellung entgegen einer durch zumindest ein Druckelement (48) aufgebauten Druckkraft in die Freigabestellung verlagerbar ist.

52. Transportanlage (1) nach Anspruch 51, **dadurch gekennzeichnet, dass** der Positionier- und Verriegelungsvorrichtung (39) bei der Trageinheit (5) als Druckelement (48) symmetrisch bezüglich der Symmetrieebene (45) im Bereich des Positionierelements (40) auf der von diesem abgewendeten Seite jeweils eine Druckfeder (49) zugeordnet ist.

53. Transportanlage (1) nach einem der Ansprüche 44 bis 52, **dadurch gekennzeichnet, dass** die Positionier- und Verriegelungsvorrichtung (39) bei der Trageinheit (5) weiters miteinander zusammenwirkende Führungsteile (50, 51) umfasst.

54. Transportanlage (1) nach Anspruch 53, **dadurch gekennzeichnet, dass** ein erster Führungsteil (50) bei der Trageinheit (5) durch einen in der Symmetrieebene (45) sowie parallel zur Transportebene (30) ausgerichteten Bolzen (53) und ein zweiter Führungsteil (51) durch ein das Stellelement (42) durchsetzendes Langloch (54) gebildet ist.

55. Transportanlage (1) nach einem der Ansprüche 47 bis 54, **dadurch gekennzeichnet, dass** die Positionier- und Verriegelungsvorrichtung (39) bei der Trageinheit (5) weiters am Stellelement (42) angeordnete, sowie dieses auf den Teileträger (2) hin überragende und bezüglich der Symmetrieebene (45) von dieser distanzierte Stützelemente (55) umfasst, welche an der Trageinheit (5) abgestützt sind.

56. Transportanlage (1) nach Anspruch 55, **dadurch gekennzeichnet, dass** die Stützelemente (55) jeweils in eine diesen zugeordnete Ausnehmung (56) in der Trageinheit (5) eingreifen.

57. Transportanlage (1) nach Anspruch 56, **dadurch gekennzeichnet, dass** die Ausnehmungen (56) in einem plattenförmigen Bauteil (57) angeordnet sind, welcher an der Trageinheit (5) gehaltert ist.

58. Transportanlage (1) nach einem der Ansprüche 55 bis 57, **dadurch gekennzeichnet, dass** die Stützelemente (55) jeweils in etwa in einer halben Distanz (58) zwischen der Symmetrieebene (45) und voneinander distanzierten Enden (59, 60) des Stellelements (42) angeordnet sind.

59. Transportanlage (1) nach einem der Ansprüche 55 bis 58, **dadurch gekennzeichnet, dass** das Stellelement (42) an seiner dem Teileträger (2) zuwendbaren Seite ausgehend von zumindest einem der Stützelemente (55) keilförmig verjüngend in Richtung auf das Ende (59, 60) hin ausgebildet ist.

60. Transportanlage (1) nach einem der Ansprüche 50 bis 59, **dadurch gekennzeichnet, dass** der Aufnahmeraum (47) in der Trageinheit (5) auf seiner vom Teileträger (2) abgewendeten Seite jeweils ausgehend von der Symmetrieebene (45) sich keilförmig erweiternd ausgebildet ist.

61. Transportanlage (1) nach einem der Ansprüche 47 bis 60, **dadurch gekennzeichnet, dass** dem Stellelement (42) der Positionier- und Verriegelungsvorrichtung (39) an zumindest einem Ende (59, 60), vorzugsweise an jenem Ende, welches von der Übergabeeinrichtung (8) abgewendet ist, eine Betätigungsvorrichtung (61) zugeordnet ist.

62. Transportanlage (1) nach einem der Ansprüche 47 bis 61, **dadurch gekennzeichnet, dass** dem Stellelement (42) der Positionier- und Verriegelungsvorrichtung (39) an zumindest einem Ende (59, 60), vorzugsweise an jenem Ende, welches der Übergabeeinrichtung (8) zugewendet ist, eine Überwachungsvorrichtung (62) zugeordnet ist.

63. Verfahren zum Umsetzen eines Teileträgers (2) in einer Transportanlage (1) mittels einer Übergabeeinrichtung (8) und einer der Übergabeeinrichtung (8) zugeordneten Vorschubvorrichtung (9) für den Eingriff mit am Teileträger (2) angeordneten Eingriffselementen (10), von einem Transportsystem (3) mit einer ersten Führungsbahn (4) auf eine dazu distanzierte sowie gegebenenfalls quer zur ersten Führungsbahn (4) ausgerichtete weitere Führungsbahn (6), bei dem entlang der ersten Führungsbahn (4) zumindest eine Trageinheit (5) verfahren wird und durch die Trageinheit (5) während ihrer Längsbewegung entlang der ersten Führungsbahn (4) ein Lichtraumprofil definiert wird **dadurch gekennzeichnet, dass** vor dem Verfahren der Trageinheit (5) entlang der ersten Führungsbahn (4) ein erster, dem Transportsystem (3) zugewendeter, Förderabschnitt (11) der Vorschubvorrichtung (9) in eine Ruhestellung außerhalb des Lichtraumprofils der Trageineinheit (5) verstellt wird, vor dem Ausschleusen des Teileträgers (2) vom Transportsystem (3) an die weitere Führungsbahn (6) die Trageinheit (5) mit dem Teileträger (2) durch das Transportsystem (3) in eine Übergabeposition bezüglich der Übergabeeinrichtung (8) verfahren und in dieser Übergabeposition angehalten wird, anschließend daran der erste Förderabschnitt (11) der Vorschubvorrichtung (9) in eine Eingriffsstellung innerhalb des Lichtraumprofils der Trageinheit (5) verstellt und dabei in Eingriff mit den Eingriffselementen (10) des Teileträgers (2) gebracht wird, wobei bei Betätigung der Vorschubvorrichtung (9) der Teileträger (2) von der Trageinheit (5) auf die Übergabeeinrichtung (8) verfahren wird, unmittelbar darauf der erste Förderabschnitt (11) der Vorschubvorrichtung (9) wieder in die Ruhestellung außerhalb des Lichtraumprofils der Trageinheit (5) verstellt wird und dabei die Eingriffselemente (10) des Teileträgers (2) mit dem zweiten Förderabschnitt (12) der Vorschubvorrichtung (9) in Engriff gebracht werden und bei weiterer Betätigung der Vorschubvorrichtung (9) der Teileträger von der Übergabeeinrichtung (8) auf die weitere Führungsbahn (6) verfahren wird und beim Einschleusen des Teileträgers (2) von der weiteren Führungsbahn (6) zur ersten Führungsbahn (4) des Transportsystems (3) die Eingriffselemente (10) des Teileträgers (2) mit dem zweiten Förderabschnitt (12) der Vorschubvorrichtung (9) in Engriff gebracht werden und bei Betätigung der Vorschubvorrichtung (9) der Teileträger (2) zur Übergabeeinrichtung (8) verfahren wird, wobei sich während dem Verfahren der Trageinheit (5) entlang der ersten Führungsbahn (4) sowie während der Vorschubbewegung des Teileträgers (2) der erste, dem Transportsystem (3) zugewendete Förderabschnitt (11) der Vorschubvorrichtung (9) in der Ruhestellung außerhalb des Lichtraumprofils der Trageineinheit (5) befindet, nachfolgend die Trageinheit (5) für den Teileträger (2) durch das Transportsystem (3) in eine Übergabeposition bezüglich der Übergabeeinrichtung (8) verfahren und in dieser Übergabeposition angehalten wird, anschließend daran der erste Förderabschnitt (11) der Vorschubvorrichtung (9) in die Eingriffsstellung innerhalb des Lichtraumprofils der Trageinheit (5) verstellt und dabei in Eingriff mit den Eingriffselementen (10) des Teileträgers (2) gebracht wird, wobei bei Betätigung der Vorschubvorrichtung (9) der Teileträger (2) von der Übergabeeinrichtung (8) auf die Trageinheit (5) verfahren wird und unmittelbar darauf der erste Förderabschnitt (11) der Vorschubvorrichtung (9) wieder in die Ruhestellung außerhalb des Lichtraumprofils der Trageinheit (5) verstellt wird.

64. Verfahren nach Anspruch 63, **dadurch gekennzeichnet, dass** der Teileträger (2) an der Trageinheit (5) relativ zu dieser positioniert und verriegelt gehalten wird.

65. Verfahren nach Anspruch 63 oder 64, **dadurch gekennzeichnet, dass** der Teileträger (2) bei in Eingriff stehenden Führungsorganen (28) mit weiteren den Führungselementen (35) der Trageinheit (5) der Teileträger (2) relativ gegenüber der Trageinheit (5) minimal in senkrechter Richtung bezüglich der Transportebene (30) angehoben wird und in senkrechter Richtung bezüglich der Transportebene (30) an der Trageinheit (5) abgestützt wird.

## Claims

1. Transport system (1) for parts carriers (2) with at least one transport system (3) which forms a first guide track (4) and the transport system (3) has at least one support unit (5) for the parts carrier (2) which can be displaced along its first guide track (4), and the support unit (5) defines a structure clearance as it advances along the first guide track (4), with another guide track (6) which is disposed at a distance apart from the first guide track (4) and optionally oriented transversely to it, with a transfer unit (8) for re-positioning the parts carrier (2) between the two guide tracks (4, 6), which transfer unit (8) has a feeding device (9) for the parts carrier (2) and the feeding device (9) can be moved into engagement with locating elements (10) disposed on the parts carrier (2), **characterised in that** the feeding device (9) of the transfer unit (8) has a first and a second conveyor section (11,12), and the first conveyor section (11) is directed towards the first guide track of the transport system (3) and the first conveyor section (11) can be moved from a position engaged with the locating elements (10) disposed on the parts carrier (2) into a disengaged idle position, and when in the engaged position, the first conveyor section (11) extends into at least certain regions of the structure clearance of the support unit (5) for the parts carrier (2) and is disposed in a position outside of the structure clearance of the support unit (5) when the first conveyor section (11) is in the idle position.

2. Transport system (1) as claimed in claim 1, **characterised in that**, in its idle position, the first conveyor section (11) is disposed in the region of the structure clearance and underneath it.

3. Transport system (1) as claimed in claim 1 or 2, **characterised in that** the conveyor section (11, 12) of the feeding device (9) is formed by a transport element such as an endlessly circulating traction means or a roller track.

4. Transport system (1) as claimed in one of the preceding claims, **characterised in that** the two conveyor sections (11, 12) are disposed one immediately after the other.

5. Transport system (1) as claimed in one of the preceding claims, **characterised in that** the two conveyor sections (11, 12) respectively constitute conveyor planes (13, 14) and subtend an obtuse angle (15).

6. Transport system (1) as claimed in one of the preceding claims, **characterised in that** the two conveyor sections (11, 12) are formed by a common, continuous transport element.

7. Transport system (1) as claimed in one of the preceding claims, **characterised in that**, when the first conveyor section (11) is in the idle position, the second conveyor section (12) is in its engaged position.

8. Transport system (1) as claimed in one of the preceding claims, **characterised in that**, when the second conveyor section (12) is in the idle position, the first conveyor section (11) is in its engaged position.

9. Transport system (1) as claimed in one of the preceding claims, **characterised in that** a common support part (63) co-operates with the two conveyor sections (11, 12) and the support part (63) can be moved together with the two conveyor sections (11, 12) about a common pivot axis (16) respectively between the two positions (engaged position and idle position).

10. Transport system (1) as claimed in claim 9, **characterised in that** the pivot axis (16) is oriented in the direction perpendicular to the feed direction of the conveyor sections (11,1 2) and in the direction parallel with the conveyor plane (13, 14) in the region of the conveyor sections (11, 12).

11. Transport system (1) as claimed in claim 9 or claim 10, **characterised in that** at least one drive element (17) co-operates with the transport element of the feeding device (9) and an axis of rotation (18) of the drive element (17) and the pivot axis (16) of the conveyor sections (11, 12) are disposed on a common axis.

12. Transport system (1) as claimed in one of the preceding claims, **characterised in that** a base housing (19) of the feeding device (9) provides a mount for a support housing (20) of the conveyor sections (11, 12) and a drive shaft (21) for the drive element (17) is mounted inside the support housing (20).

13. Transport system (1) as claimed in claim 12, **characterised in that** the drive shaft (21) extends through the support housing (20) and the drive element (17) for the transport element is disposed on a first end (22).

14. Transport system (1) as claimed in claim 12 or 13, **characterised in that** another drive element (24) is disposed on the drive shaft (21) at the other end (23) and the drive shaft (21) is driven by it.

15. Transport system (1) as claimed in one of claims 12 to 14, **characterised in that** an actuator drive (25) co-operates with the support housing (20) or the support part (63), by means of which the conveyor sections (11, 12) can be moved between their two positions (engaged position and idle position).

16. Transport system (1) as claimed in one of claims 12 to 15, **characterised in that** means co-operate with the conveyor section (11,12) in order to restrict its pivoting movement on reaching a position (engaged position, idle position), by means of which respective end positions are defined.

17. Transport system (1) as claimed in claim 16, **characterised in that** a vibration damper co-operates with the means for restricting the pivoting movement on reaching the end positions.

18. Transport system (1) as claimed in claim 16 or 17, **characterised in that** a sensor (66) co-operates with the means for restricting the pivoting movement on reaching at least one of the end positions.

19. Transport system (1) as claimed in one of the preceding claims, **characterised in that** the transfer unit (8) is provided with guide elements (27) for the parts carrier (2) in the region of the conveyor sections (11,12).

20. Transport system (1) as claimed in claim 19, **characterised in that** the guide elements (27) are provided in the form of guide strips which respectively have a V-shaped cross-section at mutually remote faces as viewed in the conveying direction and a converging cross-section in the opposite direction.

21. Transport system (1) as claimed in one of the preceding claims, **characterised in that** the parts carrier (2) has guide members (28) with a groove-shaped recess (29) to provide a vertical and/or lateral guiding action.

22. Transport system (1) as claimed in claim 21, **characterised in that** the guide members (28) are provided in the form of guide rollers (32) rotating about axes (31) oriented perpendicular to a transport plane (30).

23. Transport system (1) as claimed in claim 21 or 22, **characterised in that** the groove-shaped recess (29) of the guide members (28) complements the V-shaped cross-section of the guide strips.

24. Transport system (1) as claimed in one of claims 21 to 23, **characterised in that** the guide members (28) are disposed on the parts carrier (2) in corner regions at mutually opposite ends.

25. Transport system (1) as claimed in claim 19 or 20 and one of claims 21 to 24, **characterised in that** the guide members (28) co-operate with the guide elements (27) at least in the region of the conveyor sections (11,12).

26. Transport system (1) as claimed in one of claims 22 to 25, **characterised in that** the parts carrier (2) is preferably of a rectangular cuboid design and the guide rollers (32) are disposed on the parts carrier (2) on a bottom face (33) directed towards the transport plane (30).

27. Transport system (1) as claimed in one of the preceding claims, **characterised in that** the parts carrier (2) has at least one passage (34) extending through it in the direction perpendicular to a transport plane (30).

28. Transport system (1) as claimed in one of claims 19 or 20 and one of claims 21 to 27, **characterised in that** the guide elements (27) of the transfer unit (8) engage with the respectively mutually facing faces of the guide members (28) of the parts carrier (2) at least in the region of the conveyor sections (11,12).

29. Transport system (1) as claimed in one of claims 21 to 28, **characterised in that** other guide elements (35) for the guide members (28) of the parts carrier (2) with the groove-shaped recess (29) are provided on the support unit (5), and they are oriented in a direction parallel with the inward and outward transfer direction.

30. Transport system (1) as claimed in claim 29, **characterised in that** the other guide elements (35) of the support unit (5) locate with the mutually facing ends of the guide members (28) of the parts carrier (2) respectively.

31. Transport system (1) as claimed in claim 29 or 30, **characterised in that** the other guide elements (35) of the support unit (5) extend towards the end of the first conveyor section (11) facing the support unit (5) in the direction towards the second conveyor section (12).

32. Transport system (1) as claimed in one of claims 29 to 31, **characterised in that**, when the parts carrier (2) is in a position on the support unit (5) and the guide members (28) are engaged with the other guide elements (35) of the support unit (5), the parts carrier (2) is raised to a minimum degree relative to the support unit (5) in the direction perpendicular to the transport plane (30) and is supported on the support unit (5) in the direction perpendicular to the transport plane (30).

33. Transport system (1) as claimed in claim 32, **characterised in that** the parts carrier (2) has supporting parts (36) in certain regions of its end facing the support unit (5) to provide support on the support unit (5).

34. Transport system (1) as claimed in claim 33, **characterised in that** the supporting parts (36) are disposed in the region of the diagonals of the parts carrier (2).

35. Transport system (1) as claimed in one of claims 33 or 34, **characterised in that** the supporting parts (36) are preferably of an approximately L-shaped design and leg ends (67) of the supporting parts (36) extend across end faces (68) of the parts carrier (2).

36. Transport system (1) as claimed in claim 35, **characterised in that** the leg end (67) of the supporting part (36) co-operates with a support seating (69) on the support unit (5) to provide support on the latter.

37. Transport system (1) as claimed in claim 36, **characterised in that** a support seating (69) is disposed on the support unit (5) respectively in its corner regions.

38. Transport system (1) as claimed in claim 36 or 37, **characterised in that** the support seating (69) has a C-shaped, groove-shaped cut-out (70) open towards the leg end (67) for accommodating the leg end (67) of the supporting part (36).

39. Transport system (1) as claimed in claim 38, **characterised in that** a longitudinal extension of the C-shaped, groove-shaped cut-out (70) is oriented in the same longitudinal extension as the guide elements (35) on the support unit (5).

40. Transport system (1) as claimed in one of claims 33 to 35, **characterised in that** the supporting parts (36) form support surfaces (37) on the end facing the support unit (5) which lie against the guide elements (35) facing them in order to provide support on the support unit (5).

41. Transport system (1) as claimed in claim 32, **characterised in that** the parts carrier (2) is supported on the support unit (5) by means of end faces of the shafts (31) of the guide rollers (32).

42. Transport system (1) as claimed in one of the preceding claims, **characterised in that** the parts carrier (2) is provided with a means for identifying it at its end facing the support unit (5).

43. Transport system (1) as claimed in one of the preceding claims, **characterised in that** the support unit (5) has a indentation (38) at least in the region facing the first conveyor section (11).

44. Transport system (1) as claimed in one of the preceding claims, **characterised in that** at least one positioning and locking device (39) is provided between the support unit (5) and the parts carrier (2).

45. Transport system (1) as claimed in claim 44, **characterised in that** the positioning and locking device (39) on the support unit (5) has at least one positioning element (40) which has angled surfaces (41) tapering towards the parts carrier (2) at oppositely lying ends.

46. Transport system (1) as claimed in claim 45, **characterised in that** the angled surfaces (41) are respectively oriented in the direction perpendicular to the longitudinal extension of the other guide elements (35).

47. Transport system (1) as claimed in one of claims 29 to 41 and one of claims 44 to 46, **characterised in that** the positioning and locking device (39) on the support unit (5) also has an actuator element (42) of a bar-shaped design oriented parallel with the longitudinal extension of the other guide elements (35).

48. Transport system (1) as claimed in one of claims 45 to 47, **characterised in that** the positioning element (40) is disposed on the actuator element (41) and when the positioning element (40) is in the positioning and locking position, it co-operates with a complementary positioning cut-out (43) disposed in the parts carrier (2).

49. Transport system (1) as claimed in one of claims 29 to 41 and one of claims 44 to 48, **characterised in that** the positioning and locking device (39) on the support unit (5) is of a symmetrical design by reference to a plane of symmetry (45) and the plane of symmetry (45) extends through a centre (46) of the support unit (5) and is oriented perpendicular to the direction of the longitudinal extension of the other guide elements (35) and in the direction perpendicular to the transport plane (30).

50. Transport system (1) as claimed in one of claims 47 to 49, **characterised in that** the actuator element (42) of the positioning and locking device (39) on the support unit (5) is disposed in a housing compartment (47) inside the latter.

51. Transport system (1) as claimed in one of claims 44 to 50, **characterised in that** the positioning and locking device (39) on the support unit (5) can be moved from the positioning and locking position into the release position against a pressing force generated by at least one compression element (48).

52. Transport system (1) as claimed in claim 51, **characterised in that** the positioning and locking device (39) on the support unit (5) is respectively provided with a compression element (48) in the form of a compression spring (49) disposed symmetrically with respect to the plane of symmetry (45) in the region of the positioning element (40) on the side facing away from the latter.

53. Transport system (1) as claimed in one of claims 44 to 52, **characterised in that** the positioning and locking device (39) on the support unit (5) also has mutually co-operating guide parts (50, 51).

54. Transport system (1) as claimed in claim 53, **characterised in that** a first guide part (50) on the support unit (5) is provided in the form of a bolt (53) disposed in the plane of symmetry (45) and oriented parallel with the transport plane (30), and a second guide part (51) is provided in the form of a slot (54) through which the actuator element (42) extends.

55. Transport system (1) as claimed in one of claims 47 to 54, **characterised in that** the positioning and locking device (39) on the support unit (5) also has support elements (55) which are disposed on the actuator element (42) and extend beyond it on the parts carrier (2) spaced apart from the plane of symmetry (45), which are supported on the support unit (5).

56. Transport system (1) as claimed in claim 55, **characterised in that** the support elements (55) respectively locate in a cut-out (56) in the support unit (5) co-operating with them.

57. Transport system (1) as claimed in claim 56, **characterised in that** the cut-outs (56) are disposed in a plate-shaped component (57) retained on the support unit (5).

58. Transport system (1) as claimed in one of claims 55 to 57, **characterised in that** the support elements (55) are respectively disposed at approximately a half distance (58) between the plane of symmetry (45) and mutually spaced apart ends (59, 60) of the actuator element (42).

59. Transport system (1) as claimed in one of claims 55 to 58, **characterised in that** the actuator element (42) is of a conical shape tapering in the direction towards the end (59, 60) at its end which can be turned towards the parts carrier (2), starting from at least one of the support elements (55).

60. Transport system (1) as claimed in one of claims 50 to 59, **characterised in that** the housing compartment (47) in the support unit (5) is of a diverging conical shape starting from the plane of symmetry (45) at its end remote from the parts carrier (2).

61. Transport system (1) as claimed in one of claims 47 to 60, **characterised in that** the actuator element (42) of the positioning and locking device (39) is provided with an operating mechanism (61) at one end (59, 60) at least, preferably the end facing away from the transfer unit (8).

62. Transport system (1) as claimed in one of claims 47 to 61, **characterised in that** the actuator element (42) of the positioning and locking device (39) is provided with a monitoring device (62) at one end (59, 60) at least, preferably the end facing the transfer unit (8).

63. Method of transferring a parts carrier (2) in a transport system (1) by means of a transfer unit (8) and a feeding device (9) co-operating with the feeding unit (8) in order to engage with locating elements (10) disposed on the parts carrier (2), from a transport system (3) with a first guide track (4) to another guide track (6) disposed at a distance apart from and optionally extending transversely to the first guide track (4), whereby at least one support unit (5) is moved along the first guide track (4), and a structure clearance is defined by the support unit (5) during its longitudinal movement along the first guide track (4), **characterised in that** before the support unit (5) is moved along the first guide track (4), a first conveyor section (11) of the feeding device (9) facing the transport system (3) is moved into an idle position outside of the structure clearance of the support unit (5), and before the parts carrier (2) is transferred from the transport system (3) to the other guide track (6), the support unit (5) together with the parts carrier (2) is moved by the transport system (3) into a transfer position relative to the transfer unit (8) and is held in this transfer position, after which the first conveyor section (11) of the feeding device (9) is moved into an engaged position inside the structure clearance of the support unit (5) and thus moved into engagement with the locating elements (10) of the parts carrier (2), and when the feeding device (9) is operated, the parts carrier (2) is moved by the support unit (5) towards the transfer unit (8), immediately after which the first conveyor section (11) of the feeding device (9) is moved back into the idle position outside the structure clearance of the support unit (5) and the locating elements (10) of the parts carrier (2) are thus moved into engagement with the second conveyor section (12) of the feeding device (9), and when the feeding device (9) is operated again, the parts carrier is moved from the transfer unit (8) towards the other guide track (6), and as the parts carrier (2) is transferred from the other guide track (6) to the first guide track (4) of the transport system (3), the locating elements (10) of the parts carrier (2) are moved into engagement with the second conveyor section (12) of the feeding device (9), and when the feeding device (9) is operated, the parts carrier (2) is moved to the transfer unit (8), and as the support unit (5) is moved along the first guide track (4) and during the feeding movement of the parts carrier (2), the first conveyor section (11) of the feeding device (9) facing the transport system (3) is disposed in the idle position outside the structure clearance of the support unit (5), after which the support unit (5) for the parts carrier (2) is moved by the transport system (3) into a transfer position relative to the transfer unit (8) and is held in this position, after which the first conveyor section (11) of the feeding device (9) is moved into the engaged position inside the structure clearance of the support unit (5) and thus moved into engagement with the locating elements (10) of the parts carrier (2), and when the feeding device (9) is operated, the parts carrier (2) is moved from the transfer unit (8) towards the support unit (5) and the first conveyor section (11) of the feeding device (9) is then moved immediately back into the idle position outside the structure clearance of the support unit (5).

64. Method as claimed in claim 63, **characterised in that** the parts carrier (2) is held on the support unit (5) positioned and locked relative to it.

65. Method as claimed in claim 63 or 64, **characterised in that**, when the guide members (28) of the parts carrier (2) are engaged with the other guide elements (35) of the support unit (5), the parts carrier (2) is raised to a minimum degree in the direction perpendicular to the transport plane (30) relative to the support unit (5) and is supported on the support unit (5) in the vertical direction by reference to the transport plane (30).

## Revendications

1. Installation de transport (1) pour des porte-pièces (2), comportant au moins un système de transport (3), qui forme une première voie de guidage (4), et le système de transport (3) comporte, le long de sa première voie de guidage (4), au moins une unité de support (5) mobile pour le porte-pièces (2), et l'unité de support (5) définit un profil d'espace libre pendant son mouvement d'avance le long de la première voie de guidage (4), comportant une voie de guidage (6) supplémentaire, qui est située à distance de la première voie de guidage (4) et, le cas échéant, orientée transversalement par rapport à celle-ci, comportant un dispositif de transfert (8) pour déplacer le porte-pièces (2) entre les deux voies de guidage (4, 6), ledit dispositif de transfert (8) comportant un dispositif d'avance (9) pour le porte-pièces (2) et ledit dispositif d'avance (9) pouvant être amené en prise avec des éléments d'engrènement (10) disposés sur le porte-pièces (2), **caractérisée en ce que** le dispositif d'avance (9) du dispositif de transfert (8) comporte un premier et un deuxième tronçon de convoyage (11, 12), le premier tronçon de convoyage (11) étant dirigé vers la première voie de guidage du système de transport (3), et le premier tronçon de convoyage (11) pouvant être amené d'une position de travail, en prise avec les éléments d'engrènement (10) disposés sur le porte-pièces (2), dans une position de repos, située hors de prise, sachant que, dans la position de travail, le premier tronçon de convoyage (11) s'engage au moins par zones à l'intérieur du profil d'espace libre de l'unité de support (5) pour le porte-pièces (2), et, dans la position de repos, le premier tronçon de convoyage (11) est disposé dans une position en dehors du profil d'espace libre de l'unité de support (5).

2. Installation de transport (1) selon la revendication 1, **caractérisée en ce que** le premier tronçon de convoyage (11), dans sa position de repos, est disposé dans la zone du profil d'espace libre en dessous de celui-ci.

3. Installation de transport (1) selon la revendication 1 ou 2, **caractérisée en ce que** le tronçon de convoyage (11, 12) du dispositif d'avance (9) est formé par un organe de transport, tel qu'un moyen de traction tournant en continu ou un transporteur à rouleaux.

4. Installation de transport (1) selon l'une quelconque des revendications précédentes, **caractérisée en ce que** les deux tronçons de convoyage (11, 12) sont disposés directement l'un derrière l'autre.

5. Installation de transport (1) selon l'une quelconque des revendications précédentes, **caractérisée en ce que** les deux tronçons de convoyage (11, 12) forment respectivement des plans de transport (13, 14) et ceux-ci délimitent entre eux un angle obtus (15).

6. Installation de transport (1) selon l'une quelconque des revendications précédentes, **caractérisée en ce que** les deux tronçons de convoyage (11, 12) sont formés par un organe de transport commun, réalisé en continu.

7. Installation de transport (1) selon l'une quelconque des revendications précédentes, **caractérisée en ce que**, lorsque le premier tronçon de convoyage (11) est situé dans la position de repos, le deuxième tronçon de convoyage (12) est situé dans sa position de travail.

8. Installation de transport (1) selon l'une quelconque des revendications précédentes, **caractérisée en ce que**, lorsque le deuxième tronçon de convoyage (12) est situé dans la position de repos, le premier tronçon de convoyage (11) se situe dans sa position de travail.

9. Installation de transport (1) selon l'une quelconque des revendications précédentes, **caractérisée en ce qu'**un élément porteur (63) commun est associé aux deux tronçons de convoyage (11, 12), et l'élément porteur (63) peut être déplacé avec les deux tronçons de convoyage (11, 12) autour d'un axe de pivotement (16) commun, respectivement entre les deux positions (position de travail et position de repos).

10. Installation de transport (1) selon la revendication 9, **caractérisée en ce que** l'axe de pivotement (16) est orienté dans la direction perpendiculaire à la direction d'avance des tronçons de convoyage (11, 12), ainsi que dans la direction parallèle aux plans de transport (13, 14) dans la zone des tronçons de convoyage (11, 12).

11. Installation de transport (1) selon la revendication 9 ou la revendication 10, **caractérisée en ce qu'**au moins un organe d'entraînement (17) est associé à l'organe de transport du dispositif d'avance (9), et un axe de rotation (18) de l'organe d'entraînement (17) et l'axe de pivotement (16) des tronçons de convoyage (11, 12) sont disposés dans un axe commun.

12. Installation de transport (1) selon l'une quelconque des revendications précédentes, **caractérisée en ce qu'**un carter de base (19) du dispositif d'avance (9) loge un carter de support (20) des tronçons de convoyage (11, 12), et un arbre d'entraînement (21) pour l'organe d'entraînement (17) est logé à l'intérieur du carter de support (20).

13. Installation de transport (1) selon la revendication 12, **caractérisée en ce que** l'arbre d'entraînement (21) traverse le carter de support (20) et, au niveau d'une première extrémité (22), est disposé l'organe d'entraînement (17) pour l'organe de transport.

14. Installation de transport (1) selon la revendication 12 ou 13, **caractérisée en ce que** sur l'arbre d'entraînement (21), au niveau de l'autre extrémité (23), est disposé un organe d'entraînement (24) supplémentaire, et l'actionnement de l'arbre d'entraînement (21) est assuré par ce dernier.

15. Installation de transport (1) selon l'une quelconque des revendications 12 à 14, **caractérisée en ce qu'**au carter de support (20) ou à l'élément porteur (63) est associé un servomoteur (25), par lequel les tronçons de convoyage (11, 12) peuvent être déplacés entre leurs deux positions (position de travail et position de repos).

16. Installation de transport (1) selon l'une quelconque des revendications 12 à 15, **caractérisée en ce qu'**au tronçon de convoyage (11, 12) sont associés des moyens destinés à limiter son mouvement de pivotement lorsqu'il atteint une position (position de travail, position de repos), lesquels moyens définissent respectivement des positions de fin de course.

17. Installation de transport (1) selon la revendication 16, **caractérisée en ce qu'**un amortisseur est associé à chacun des moyens destinés à limiter le mouvement de pivotement lorsqu'ils atteignent leurs positions de fin de course.

18. Installation de transport (1) selon la revendication 16 ou 17, **caractérisée en ce qu'**un capteur (66) est associé aux moyens destinés à limiter le mouvement de pivotement lorsqu'ils atteignent au moins une des positions de fin de course.

19. Installation de transport (1) selon l'une quelconque des revendications précédentes, **caractérisée en ce que** des éléments de guidage (27) pour le porte-pièces (2) sont associés au dispositif de transfert (8) dans la zone des tronçons de convoyage (11, 12).

20. Installation de transport (1) selon la revendication 19, **caractérisée en ce que** les éléments de guidage (27) sont formés par des barres de guidage, qui possèdent une section, qui est réalisée respectivement en forme de V sur des faces détournées l'une de l'autre, par référence à la direction de transport, et qui converge dans la direction opposée.

21. Installation de transport (1) selon l'une quelconque des revendications précédentes, **caractérisée en ce que** le porte-pièces (2) comporte des organes de guidage (28) avec un creux (29) en forme de gorge pour le guidage en hauteur et le guidage latéral.

22. Installation de transport (1) selon la revendication 21, **caractérisée en ce que** les organes de guidage (28) sont formés par des galets de guidage (32) tournant autour de pivots (31) orientés perpendiculairement à un plan de transport (30).

23. Installation de transport (1) selon la revendication 21 ou 22, **caractérisée en ce que** le creux (29) en forme de gorge des organes de guidage (28) est réalisé de manière diamétralement opposée à la section en forme de V des barres de guidage.

24. Installation de transport (1) selon l'une quelconque des revendications 21 à 23, **caractérisée en ce que** les organes de guidage (28) sur le porte-pièces (2) sont disposés sur des côtés opposés l'un à l'autre respectivement dans les zones d'angle.

25. Installation de transport (1) selon la revendication 19 ou 20 et l'une quelconque des revendications 21 à 24, **caractérisée en ce que** les organes de guidage (28) coopèrent avec les éléments de guidage (27) au moins dans la zone des tronçons de convoyage (11, 12).

26. Installation de transport (1) selon l'une quelconque des revendications 22 à 25, **caractérisée en ce que** le porte-pièces (2) est de préférence carré et les galets de guidage (32) sont disposés sur le porte-pièces (2), sur une face inférieure (33) orientée vers le plan de transport (30).

27. Installation de transport (1) selon l'une quelconque des revendications précédentes, **caractérisée en ce que** le porte-pièces (2) comporte au moins un passage (34) le traversant de part en part dans la direction perpendiculaire à un plan de transport (30).

28. Installation de transport (1) selon la revendication 19 ou 20 et l'une quelconque des revendications 21 à 27, **caractérisée en ce que** les éléments de guidage (27) du dispositif de transfert (8) engrènent, au moins dans la zone des tronçons de convoyage (11, 12), avec les faces orientées respectivement l'une vers l'autre des organes de guidage (28) du porte-pièces (2).

29. Installation de transport (1) selon l'une quelconque des revendications 21 à 28, **caractérisée en ce que** des éléments de guidage (35) supplémentaires pour les organes de guidage (28) du porte-pièces (2), munis du creux (29) en forme de gorge, sont disposés sur l'unité de support (5), sachant que lesdits éléments de guidage sont orientés parallèlement à la direction d'entrée et de sortie.

30. Installation de transport (1) selon la revendication 29, **caractérisée en ce que** les éléments de guidage (35) supplémentaires de l'unité de support (5) engrènent avec les faces orientées respectivement l'une vers l'autre des organes de guidage (28) du porte-pièces (2).

31. Installation de transport (1) selon la revendication 29 ou 30, **caractérisée en ce que** les éléments de guidage (35) supplémentaires de l'unité de support (5) s'avancent au-delà de l'extrémité du premier tronçon de convoyage (11), orientée vers l'unité de support (5), dans la direction vers le deuxième tronçon de convoyage (12).

32. Installation de transport (1) selon l'une quelconque des revendications 29 à 31, **caractérisée en ce que** le porte-pièces (2), lorsqu'il se situe dans une position sur l'unité de support (5) et lorsque les organes de guidage (28) engrènent avec les éléments de guidage (35) supplémentaires de l'unité de support (5), ledit porte-pièces (2) est légèrement soulevé par rapport à l'unité de support (5) dans la direction perpendiculaire au plan de transport (30) et prend appui sur l'unité de support (5) dans une direction perpendiculaire au plan de transport (30).

33. Installation de transport (1) selon la revendication 32, **caractérisée en ce que**, pour prendre appui sur l'unité de support (5), le porte-pièces (2) comporte des éléments d'appui (36) disposés par zones sur sa face orientée vers l'unité de support (5).

34. Installation de transport (1) selon la revendication 33, **caractérisée en ce que** les éléments d'appui (36) sont disposés dans la zone des diagonales du porte-pièces (2).

35. Installation de transport (1) selon la revendication 33 ou 34, **caractérisée en ce que** les éléments d'appui (36) sont réalisés de préférence sensiblement en forme de L, et les extrémités (67) des branches des éléments d'appui (36) s'avancent au-delà des faces frontales (68) du porte-pièces (2).

36. Installation de transport (1) selon la revendication 35, **caractérisée en ce que** les extrémités (67) des branches de l'élément d'appui (36) coopèrent avec un plot de support (69) sur l'unité de support (5) pour prendre appui sur celui-ci.

37. Installation de transport (1) selon la revendication 36, **caractérisée en ce que** respectivement un plot de support (69) est disposé sur l'unité de support (5), dans les zones d'angle de celle-ci.

38. Installation de transport (1) selon la revendication 36 ou 37, **caractérisée en ce que** le plot de support (69) est réalisé en forme de C et comporte un évidement (70) en forme de gorge ouverte vers l'extrémité (67) de la branche de l'élément d'appui (36), afin de recevoir l'extrémité (67) de la branche dudit élément d'appui.

39. Installation de transport (1) selon la revendication 38, **caractérisée en ce qu'**une dimension longitudinale de l'évidement (70), formant une gorge réalisée en forme de C, est orientée dans le même sens que la dimension longitudinale des éléments de guidage (35) sur l'unité de support (5).

40. Installation de transport (1) selon l'une quelconque des revendications 33 à 35, **caractérisée en ce que** les éléments d'appui (36) sur la face orientée vers l'unité de support (5) forment des surfaces d'appui (37) qui sont en appui sur les éléments de guidage (35), orientés vers celles-ci, pour prendre appui sur l'unité de support (5).

41. Installation de transport (1) selon la revendication 32, **caractérisée en ce que** le porte-pièces (2) prend appui sur l'unité de support (5) par les faces frontales des pivots (31) des galets de guidage (32).

42. Installation de transport (1) selon l'une quelconque des revendications précédentes, **caractérisée en ce qu'**au moins un moyen destiné à l'identification du porte-pièces (2) est associé à ce dernier sur sa face orientée vers l'unité de support (5).

43. Installation de transport (1) selon l'une quelconque des revendications précédentes, **caractérisée en ce que** l'unité de support (5) comporte un passage (38), au moins dans la zone qui est orientée vers le premier tronçon de convoyage (11).

44. Installation de transport (1) selon l'une quelconque des revendications précédentes, **caractérisée en ce qu'**il est prévu au moins un dispositif de positionnement et de blocage (39) entre l'unité de support (5) et le porte-pièces (2).

45. Installation de transport (1) selon la revendication 44, **caractérisée en ce que** le dispositif de positionnement et de blocage (39) comporte, au niveau de l'unité de support (5), au moins un élément de positionnement (40) qui, sur des faces opposées, possède des surfaces (41) se rétrécissant en forme de cône vers le porte-pièces (2).

46. Installation de transport (1) selon la revendication 45, **caractérisée en ce que** les surfaces coniques (41) sont orientées chacune dans la direction perpendiculaire à la dimension longitudinale des éléments de guidage (35) supplémentaires.

47. Installation de transport (1) selon l'une quelconque des revendications 29 à 41 et l'une quelconque des revendications 44 à 46, **caractérisée en ce que** le dispositif de positionnement et de blocage (39) comporte également, au niveau de l'unité de support (5), un élément de réglage (42), qui est réalisé en forme de barre et est orienté parallèlement à la dimension longitudinale des éléments de guidage (35) supplémentaires.

48. Installation de transport (1) selon l'une quelconque des revendications 45 à 47, **caractérisée en ce que** l'élément de positionnement (40) est disposé sur l'élément de réglage (42), et, dans le dispositif de positionnement et de blocage (39), l'élément de positionnement (40) coopère avec un évidement de positionnement (43) réalisé de manière diamétralement opposée à celui-ci dans le porte-pièces (2).

49. Installation de transport (1) selon l'une quelconque des revendications 29 à 41 et l'une quelconque des revendications 44 à 48, **caractérisée en ce que** le dispositif de positionnement et de blocage (39), au niveau de l'unité de support (5), est réalisé symétriquement par rapport à un plan de symétrie (45), sachant que ledit plan de symétrie (45) passe par un centre (46) de l'unité de support (5), est orienté dans la direction perpendiculaire à la dimension longitudinale des éléments de guidage (35) supplémentaires et dans la direction perpendiculaire au plan de transport (30).

50. Installation de transport (1) selon l'une quelconque des revendications 47 à 49, **caractérisée en ce que** l'élément de réglage (42) du dispositif de positionnement et de blocage (39), au niveau de l'unité de support (5), est disposé dans un logement (47) à l'intérieur de cette dernière.

51. Installation de transport (1) selon l'une quelconque des revendications 44 à 50, **caractérisée en ce que** le dispositif de positionnement et de blocage (39), au niveau de l'unité de support (5), peut être déplacé depuis la position de positionnement et de blocage dans la position de déblocage, à l'encontre d'une force de pression générée par au moins un élément de pression (48).

52. Installation de transport (1) selon la revendication 51, **caractérisée en ce que** respectivement un ressort de pression (49), formant l'élément de pression (48), est associé au dispositif de positionnement et de blocage (39), au niveau de l'unité de support (5), symétriquement par rapport au plan de symétrie (45) dans la zone de l'élément de positionnement (40) sur la face détournée de celui-ci.

53. Installation de transport (1) selon l'une quelconque des revendications 44 à 52, **caractérisée en ce que** le dispositif de positionnement et de blocage (39), au niveau de l'unité de support (5), comporte en outre des éléments de guidage (50, 51) coopérant entre eux.

54. Installation de transport (1) selon la revendication 53, **caractérisée en ce qu'**un premier élément de guidage (50), au niveau de l'unité de support (5), est formé par un boulon (53) orienté dans le plan de symétrie (45) et parallèlement au plan de transport (30), et un deuxième élément de guidage (51) est formé par un trou oblong (54) traversant de part en part l'élément de réglage (42).

55. Installation de transport (1) selon l'une quelconque des revendications 47 à 54, **caractérisée en ce que** le dispositif de positionnement et de blocage (39), au niveau de l'unité de support (5), comporte en outre des éléments d'appui (55), qui sont disposés sur l'élément de réglage (42), s'avancent au-delà de celui-ci sur le porte-pièces (2) et, par rapport au plan de symétrie (45), sont disposés à distance de celui-ci et qui prennent appui sur l'unité de support (5).

56. Installation de transport (1) selon la revendication 55, **caractérisée en ce que** les éléments d'appui (55) s'engagent chacun dans un évidement (56), qui leur associé, dans l'unité de support (5).

57. Installation de transport (1) selon la revendication 56, **caractérisée en ce que** les évidements (56) sont disposés sur une pièce (57) en forme de plaque, laquelle est maintenue sur l'unité de support (5).

58. Installation de transport (1) selon l'une quelconque des revendications 55 à 57, **caractérisée en ce que** les éléments d'appui (55) sont disposés chacun sensiblement à la moitié de la distance (58) entre le plan de symétrie (45) et les extrémités (59, 60), écartées l'une de l'autre, de l'élément de réglage (42).

59. Installation de transport (1) selon l'une quelconque des revendications 55 à 58, **caractérisée en ce que** l'élément de réglage (42), sur sa face orientée vers le porte-pièces (2), est réalisé à partir d'au moins l'un des éléments d'appui (55) en se rétrécissant en forme de clavette en direction de l'extrémité (59, 60).

60. Installation de transport (1) selon l'une quelconque des revendications 50 à 59, **caractérisée en ce que** le logement (47) dans l'unité de support (5) est réalisé, sur sa face détournée du porte-pièces (2), respectivement en s'élargissant en forme de clavette à partir du plan de symétrie (45).

61. Installation de transport (1) selon l'une quelconque des revendications 47 à 60, **caractérisée en ce qu'**un dispositif d'actionnement (61) est associé à l'élément de réglage (42) du dispositif de positionnement et de blocage (39) au niveau d'au moins une extrémité (59, 60), de préférence à l'extrémité qui est détournée du dispositif de transfert (8).

62. Installation de transport (1) selon l'une quelconque des revendications 47 à 61, **caractérisée en ce qu'**un dispositif de surveillance (62) est associé à l'élément de réglage (42) du dispositif de positionnement et de blocage (39) au niveau d'au moins une extrémité (59, 60), de préférence à l'extrémité qui est orientée vers le dispositif de transfert (8).

63. Procédé pour déplacer un porte-pièces (2) dans une installation de transport (1) au moyen d'un dispositif de transfert (8) et d'un dispositif d'avance (9) associé au dispositif de transfert (8), pour entrer en prise avec des éléments d'engrènement (10) disposés sur le porte-pièces (2), depuis un système de transport (3) avec une première voie de guidage (4) vers une voie de guidage (6) supplémentaire située à distance de cette dernière et orientée, le cas échéant, transversalement à la première voie de guidage (4), dans lequel au moins une unité de support (5) est déplacée le long de la première voie de guidage (4), et l'unité de support (5) définit un profil d'espace libre pendant son mouvement d'avance le long de la première voie de guidage (4), **caractérisé en ce que**, avant le déplacement de l'unité de support (5) le long de la première voie de guidage (4), un premier tronçon de convoyage (11), orienté vers le système de transport (3), du dispositif d'avance (9) est amené dans une position de repos en dehors du profil d'espace libre de l'unité de support (5), avant que le porte-pièces (2) sorte depuis le système de transport (3) vers la voie de guidage (6) supplémentaire, l'unité de support (5) avec le porte-pièces (2) est déplacée par le système de transport (3) dans une position de transfert par rapport au dispositif de transfert (8) et est arrêtée dans cette position de transfert, ensuite le premier tronçon de convoyage (11) du dispositif d'avance (9) est amené dans une position de travail à l'intérieur du profil d'espace libre de l'unité de support (5) et, en l'occurrence, est amené en prise avec les éléments d'engrènement (10) du porte-pièces (2), sachant qu'au moment de l'actionnement du dispositif d'avance (9), le porte-pièces (2) est déplacé par l'unité de support (5) vers le dispositif de transfert (8), immédiatement à la suite de cela, le premier tronçon de convoyage (11) du dispositif d'avance (9) est amené à nouveau dans la position de repos en dehors du profil d'espace libre de l'unité de support (5) et, en l'occurrence, les éléments d'engrènement (10) du porte-pièces (2) sont amenés en prise avec le deuxième tronçon de convoyage (12) du dispositif d'avance (9), et, lorsque le dispositif d'avance (9) continue à être actionné, le porte-pièces est déplacé par le dispositif de transfert (8) sur la voie de guidage (6) supplémentaire et, au moment de l'entrée du porte-pièces (2) depuis la voie de guidage (6) supplémentaire vers la première voie de guidage (4) du système de transport (3), les éléments d'engrènement (10) du porte-pièces (2) sont amenés en prise avec le deuxième tronçon de convoyage (12) du dispositif d'avance (9) et, lors de l'actionnement du dispositif d'avance (9), le porte-pièces (2) est déplacé vers le dispositif de transfert (8), sachant que pendant le déplacement de l'unité de support (5) le long de la première voie de guidage (4), ainsi que pendant le mouvement d'avance du porte-pièces (2), le premier tronçon de convoyage (11), orienté vers le système de transport (3), du dispositif d'avance (9) se situe dans la position de repos en dehors du profil d'espace libre de l'unité de support (5), puis l'unité de support (5) pour le porte-pièces (2) est déplacée par le système de transport (3) dans une position de transfert par rapport au dispositif de transfert (8) et est arrêtée dans cette position de transfert, à la suite de cela, le premier tronçon de convoyage (11) du dispositif d'avance (9) est amené dans la position de travail à l'intérieur du profil d'espace libre de l'unité de support (5) et, en l'occurrence, est amené en prise avec les éléments d'engrènement (10) du porte-pièces (2), sachant qu'au moment de l'actionnement du dispositif d'avance (9), le porte-pièces (2) est déplacé par le dispositif de transfert (8) sur l'unité de support (5) et, immédiatement à la suite de cela, le premier tronçon de convoyage (11) du dispositif d'avance (9) est amené à nouveau dans la position de repos en dehors du profil d'espace libre de l'unité de support (5).

64. Procédé selon la revendication 63, **caractérisé en ce que** le porte-pièces (2) est positionné sur l'unité de support (5) par rapport à celle-ci et est maintenu bloqué.

65. Procédé selon la revendication 63 ou 64, **caractérisé en ce que** le porte-pièces (2), lorsque les organes de guidage (28) sont en prise avec les éléments de guidage (35) supplémentaires de l'unité de support (5), le porte-pièces (2) est légèrement soulevé par rapport à l'unité de support (5) dans la direction perpendiculaire au plan de transport (30) et prend appui sur l'unité de support (5) dans une direction perpendiculaire au plan de transport (30).
